# EUROPEAN PATENT SPECIFICATION

(11) **EP 1 675 032 B1**
(45) Date of publication and mention of the grant of the patent: **09.02.2011**
(21) Application number: 05258023.0
(22) Date of filing: 23.12.2005
(51) Int. Cl.: G06F 21/24

(54) **A security information estimating apparatus, a security information estimating method, and a corresponding computer program product**
Vorrichtung, Verfahren und Computerprogrammprodukt zur Schätzung von Sicherheitsinformationen
Appareil, procédé et produit informatisé d'estimation d'informations de sécurité

(30) Priority: 27.12.2004 JP 2004377748
(43) Date of publication of application: 28.06.2006
(73) Proprietor: Ricoh Company, Ltd., Tokyo 143-8555 (JP)
(72) Inventor: Saitoh, Atsuhisa, Yokohama-shi, Kanagawa (JP)
(74) Representative: White, Duncan Rohan

(56) References cited:
- EP-A- 1 509 014
- EP-A- 1 613 020
- WO-A-2004/040464
- US-A1- 2002 087 479
- US-A1- 2003 009 526
- US-A1- 2004 184 065
- SZEGO D: "A soft method for analyzing properties of web documents" FUZZY SYSTEMS, 2004. PROCEEDINGS. 2004 IEEE INTERNATIONAL CONFERENCE ON BUDAPEST, HUNGARY 25-29 JULY 2004, PISCATAWAY, NJ, USA,IEEE, vol. 3, 25 July 2004 (2004-07-25), pages 1409-1412, XP010755369 ISBN: 0-7803-8353-2
- GOTTESFELD BROWN L: "A SURVEY OF IMAGE REGISTRATION TECHNIQUES" ACM COMPUTING SURVEYS, ACM, NEW YORK, NY, US, US, vol. 24, no. 4, 1 December 1992 (1992-12-01), pages 325-376, XP002942558 ISSN: 0360-0300

## Description

### BACKGROUND OF THE INVENTION

### 1. Field of the Invention

The present invention relates to a security information estimating apparatus, a security information estimating method, a security information estimating program, and a recording medium thereof; and especially relates to a security information estimating apparatus, a security information estimating method, a security information estimating program, and a recording medium thereof for estimating security information of a document, that is the target of operations.

### 2. Description of the Related Art

When security is a concern, emphasis has been with reference to an attack from outside, such as a virus. However, in recent years and continuing, information leaks from inside, whether corporations or individuals, e.g., disclosure of customers' data and privacy information attracts attention. As a countermeasure to the information leaks, fire walls and the like are inadequate; and it is necessary to take measures according to a value of each information property, usage, and so on.

Generally, in corporations, the information property is generated, stored, and used in the form of a document. It is very important to control handling of corporate documents according to confidentiality. With this background, various technologies for controlling corporate documents have been available.

For example, according to the technology disclosed by Patent Reference 1, in order to control documents, each document is associated with a list (ACL (Access Control List)) that defines kinds of accesses permitted by each user. The confidentiality of the document is obtained by a system based on the list ACL. However, although confidentiality may be secured inside the system that operates based on ACL, confidentiality cannot be maintained once the document is taken out of the system by a user who has a permission to access the document based on the ACL.

According to the technology disclosed by Patent Reference 2, an XML (extensible Markup Language) document has a tag attribute that contains information about a group that has access permission, encryption, and a validity term. Thereby, the access control of the XML document is possible even if the XML document leaves (is taken out of) the system.

According to the technology disclosed by Patent Reference 3, a document is converted to printable data and non-printable data, which are stored as being associated with the original document. When a request for perusal is received from a client, the non-printable data are provided; and when a request for printing is received, the printable data are provided to a printer, and the like. That is, an information leak is prevented from occurring by providing only data that are required, i.e., not providing data more than necessary.
[Patent reference 1] JPA 6-4530 JP 2006 004530
[Patent reference 2] JPA 2001-273285 JP 2001 273285
[Patent reference 3] JPA 2002-342060 JP 2002342060

### [Description of the Invention]

### [Problem(s) to be solved by the Invention]

As described above, the conventional technologies such as disclosed by Patent Reference 1, Patent Reference 2, and Patent Reference 3 require certain information to be defined or set up by the user. That is, with the technology disclosed by Patent Reference 1, if ACL is not set up beforehand, access control is unrealizable. In the case of the technology disclosed by Patent Reference 2, if the information for access control is not added into the document, control cannot be performed. In the case of the technology disclosed by Patent Reference 3, unless the data according to the access permission are beforehand generated, control cannot be performed.

Furthermore, related technologies are known from US-A-2002/087479, wherein sensitivity of user data is determined by reference to policy settings. WO-A-2004/040464 discloses a method and system for managing and securing digital information based on modular and abstract description. US-A-2003/009526 discloses a method and apparatus for filtering messages.

That is, the conventional technologies require the user to define security information, such as the access permission. Further, the access control is available only when the document is within the system, or only when there is information added by the system. Accordingly, access control is not available for a document for which the user definition is not assigned (unregistered document), nor for a document in which the security information is lacking.

### SUMMARY OF THE INVENTION

The present invention provides a security information estimating apparatus, a security information estimating method, a security information estimating program, and a recording medium thereof for estimating security information of a document (operation target) that lacks of security information such that the document is properly protected, substantially obviating one or more of the problems caused by the limitations and disadvantages of the related art.

Features of the present invention are set forth in the description that follows, and in part will become apparent from the description and the accompanying drawings, or may be learned by practice of the invention according to the teachings provided in the description. Problem solutions provided by an embodiment of the present invention will be realized and attained by a security information estimating apparatus, a security information estimating method, a security information estimating program, and a recording medium thereof particularly pointed out in the specification in such full, clear, concise, and exact terms as to enable a person having ordinary skill in the art to practice the invention. To achieve these solutions and in accordance with the purpose of the invention, as embodied and broadly described herein, an embodiment of the invention provides a security information estimating apparatus, a security information estimating method, a security information estimating program, and a recording medium thereof for estimating security information of a document (operation target) as follows.

The invention is defined by a security information estimating apparatus as claimed in claim 1, a security information estimating method as claimed in claim 7 and a computer program product as claimed in claim 13.

According to the security information estimating apparatus of the invention, even if security information is not associated with a document, security information of another document that is similar to the target document is attached.

An embodiment of the present invention further provides a security information estimating method, a security information estimating program, and a recording medium that contains the security information estimating program for operating the security information estimating apparatus.

### [Effect of the Invention]

According to an embodiment of the present invention, a security information estimating apparatus, a security information estimating method, a security information estimating program, and a recording medium thereof that are capable of appropriately protecting information for which security information is not assigned are provided.

### BRIEF DESCRIPTION OF THE DRAWINGS

Fig. 1 is a block diagram showing an example structure of a security management system according to Embodiment 1 of the present invention;
Fig. 2 is a block diagram showing an example of the functional structure of a security attribute estimating server;
Fig. 3 is a block diagram showing an example of hardware configuration of the security attribute estimating server;
Fig. 4 is a sequence diagram for explaining a process of uploading a document and its security attribute value from a document server;
Fig. 5 is a sequence diagram explaining a process of estimating a security attribute value of target information;
Fig. 6 is a view showing an example of information provided as a request for estimating the security attribute value of a mail text and a file attached thereto;
Fig. 7 is a view showing an example of information provided as an estimated result of the security attribute value;
Fig. 8 is a table display for selecting a security attribute estimating method;
Fig. 9 is a table display example of selecting a security attribute estimating method, wherein a security attribute is being selected for the target information;
Fig. 10 is a table display example of selecting a security attribute estimating method, wherein an estimating method is being selected;
Fig. 11 is a table display example of selecting a security attribute estimating method, wherein a "higher order" definition is being selected;
Fig. 12 is a block diagram showing an example structure of a security management system;
Fig. 13 is a block diagram showing an example of functional configuration of a security attribute estimating server;
Fig. 14 is a sequence diagram for explaining the estimating process of the security attribute value of the target information;
Fig. 15 is a block diagram showing an example structure of the security management system according to an Embodiment of the present invention;
Fig. 16 is a block diagram of an example of functional configuration of the security attribute estimating server according to an Embodiment of the present invention;
Fig. 17 is a sequence diagram for explaining the estimating process of the security attribute value of the target information;
Fig. 18 is a sequence diagram for explaining the second process of uploading of a document and its security attribute value from the document server according to an embodiment of the present invention;
Fig. 19 is a block diagram showing an example structure of a security management system;
Fig. 20 is a view showing an example of functional configuration of a security attribute estimating server;
Fig. 21 is a sequence diagram for explaining the process of uploading the document and its security attribute value from the document server;
Fig. 22 is a sequence diagram for explaining the estimating process of the security attribute value of the target information;
Fig. 23 shows the information provided in a request for estimating the security attribute value of image data;
Fig. 24 is a block diagram showing an example structure of a security management system;
Fig. 25 is a block diagram showing an example of functional configuration of a security attribute estimating server; and
Fig. 26 is a sequence diagram for explaining the estimating process of the security attribute value of the target information.

### DESCRIPTION OF THE PREFERRED EMBODIMENTS

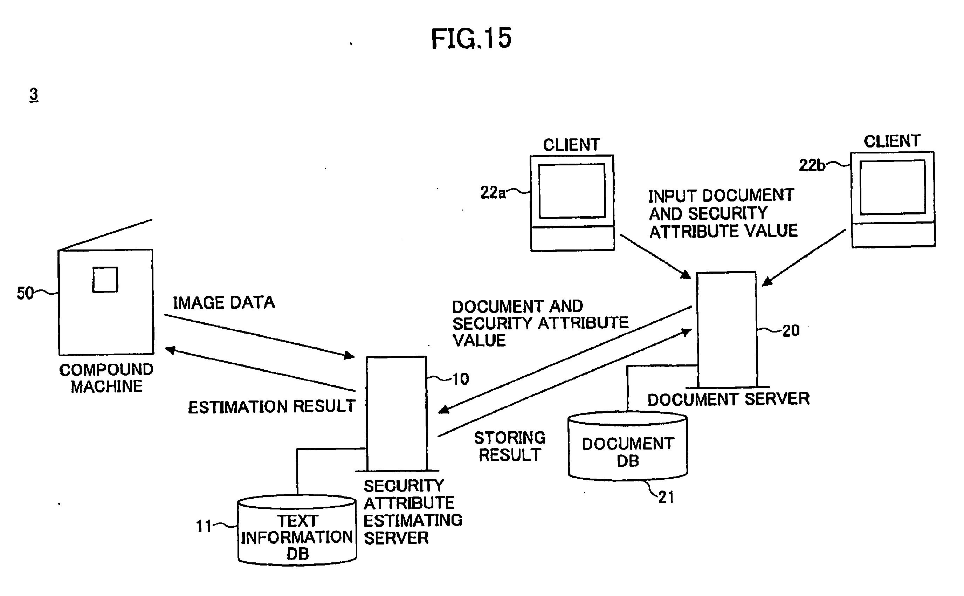

In the following, Embodiments of the present invention are described with reference to Figures 15 to 18 of the accompanying drawings.

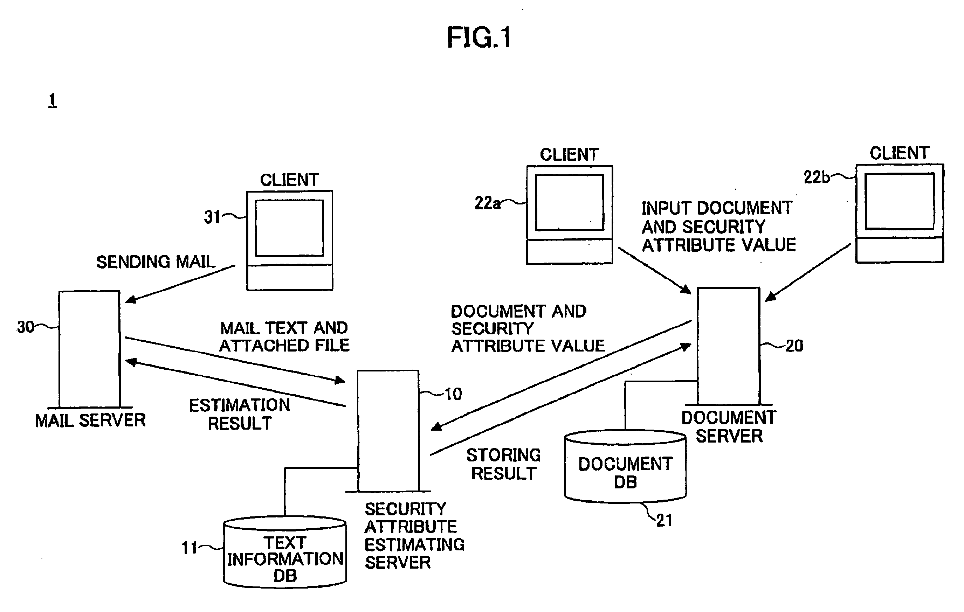

Fig. 1 shows an example of the structure of a security management system 1. As shown in Fig. 1, the security management system 1 includes a security attribute estimating server 10, a document server 20, and a mail server 30, all of which are connected by a network such as a LAN, either through a wired network, a wireless network or a combination thereof. Here, the security attribute estimating server 10, the document server 20, and the mail server 30 are installed in a corporation, an office, and the like within which informational confidentiality should be held.

The document server 20 constitutes a documentation management system with one or more clients (clients 22a, 22b, and so on), and contains an electronic document ("the document") that is uploaded by a client (such as the client 22a), and a document DB 21 that manages documents by associating various attribute values with the documents. The document server 20 provides (uploads) a document and a value of its security attribute ("security attribute value") to the security attribute estimating server 10 at a predetermined interval or whenever a document is uploaded by a client such as the client 22a.

Here, the security attribute concerns security management, such as an attribute used when controlling access to a document out of attributes of the document. While the configuration of the security attribute depends on the objective of protecting the documents, attributes that are often adequate include affiliation (one's post in the corporation, i.e., the management range of a manager), kinds of the document (personnel relation, accounting relation, a certain project relation, etc.), involving persons, involving group, secrecy level (top secret, confidential within a department, confidential within the corporation, and the like), secrecy maintenance term (date until which the secret should be kept), term of validity (date until which the document remains in force), preservation term (date until which the document should be preserved according to law).

In addition, concerning the access control based on the security attribute, technologies are disclosed in detail by JP-A-2004094401, JP-A-2004094405, JP-A-2004102635, and JP-A-2004102907. Here, the access control of a document is determined by applying a security attribute value to a predetermined security policy. Accordingly, the security attribute value is information that specifies security information, and the security policy is equivalent to the security information.

The mail server 30 is a generic mail server for providing mail service to clients 31 and so on. In order to prevent an information leak from occurring, the mail server 30 provides text and an attached file of the mail requested by a client, such as the client 31, to the security attribute estimating server 10. The mail server 30 determines whether the mail is allowed to be delivered to the requesting client based on an estimated result of the security attribute value provided by the security attribute estimating server 10.

The security attribute estimating server 10
includes a text information DB 11 for storing text information extracted from a document provided by the document server 20 and the security attribute value of the document,
compares the mail text and the attached file provided by the mail server 30 with the text information of each document stored in the text information DB 11 such that text information having contents that are the same as or similar to the contents of the mail text and the attached file is selected out of the text information stored, and
based on the security attribute value of the selected document, a security attribute value of the mail text and the attached file is estimated. The estimated security attribute value is provided to the mail server 30 as an estimated result. That is, the security information such as access permission of the mail text and the attached file is made equal to that of the similar document so that the mail text and the attached file are prevented from being unconditionally provided.

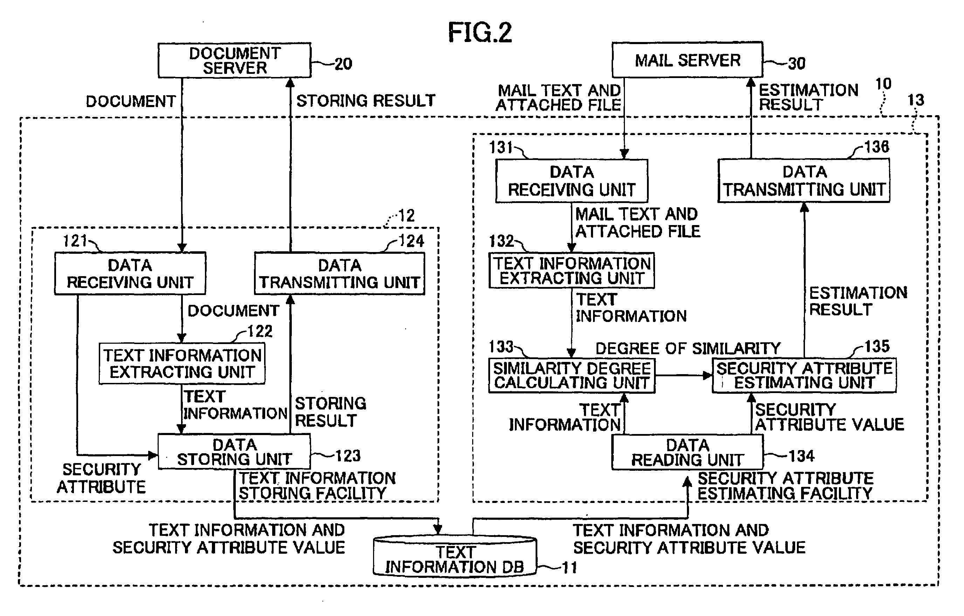

Mora details of the security attribute estimating server 10 are described with reference to Fig. 2 that shows an example of functional configuration of the security attribute estimating server 10.

The security attribute estimating server 10 includes the text information DB 11, a text information storing facility 12, and a security attribute estimating facility 13.

The text information storing facility 12 causes the text information DB 11 to store documents and security attribute values that are provided by the document server 20, and includes a data receiving unit 121, a text information extracting unit 122, a data storing unit 123, and a data transmitting unit 124.

The data receiving unit 121 is for receiving a document and its security attribute. The text information extracting unit 122 is for extracting text information from the document. In general, a document may contain text and image information. Since,

, the text information is compared, the text information has to be extracted from the document.

For this purpose, an existing text information extracting tool can be used. For example, if the document is readable by MS Word, text information can be extracted by reading the document, and by choosing "text document" as the file type for saving by MS Word. As another example, if the document is originated in MS PowerPoint, the document is first saved as "RTF" (Rich Text Format) after reading, and then saved as "text" using MS Word. Further, text information can be obtained from an Ichitaro document, a PDF document, and the like by using corresponding software.

The data storing unit 123 causes the text information DB 11 to store the text information of the document extracted by the text information extracting unit 122, and the security attribute value received by the data receiving unit 121, the text information being associated with the security attribute value. The data transmitting unit 124 is for transmitting the processing result (the associated text information and the security attribute value) to the document server 20.

The security attribute estimating facility 13 is for estimating the security attribute value of the mail text and the attached file that are provided by the mail server 30 based on the information stored in the text information DB 11. The security attribute estimating facility 13 includes a data receiving unit 131, a text information extracting unit 132, a similarity degree calculating unit 133, a data reading unit 134, a security attribute estimating unit 135, and a data transmitting unit 136.

The data receiving unit 131 is for receiving the mail text and the attached file from the mail server 30. The text information extracting unit 132 is for extracting text information from the mail text and the attached file. The similarity degree calculating unit 133 is for calculating a degree of similarity between "target text" (the text information extracted from the mail text and the attached file) and "stored text" (the text information stored in the text information DB 11) by comparing the target text and the stored text.

The data reading unit 134 is for reading the stored text from the text information DB 11 according to a request from the similarity degree calculating unit 133, and for reading the security attribute value from the text information DB 11 according to a request from the security attribute estimating unit 135. The security attribute estimating unit 135 is for estimating the security attribute value to be applied to the target text (the mail text and the attached file) based on the degree of similarity calculated by the similarity degree calculating unit 133. The data transmitting unit 136 is for providing the mail server 30 with the security attribute value to be applied to the target text based on the estimated result of the security attribute estimating unit 135.

Here, the data receiving unit 121 and the data receiving unit 131 may be the same unit; and the data transmitting unit 124 and the data transmitting unit 136 may be the same unit. Further, data communications between the data receiving unit 121, the data transmitting unit 124, the data receiving unit 131, and data transmitting unit 136; that is, the data communications between the security attribute estimating server 10, the document server 20, and the mail server 30 may use HTTP (HxperText Transfer Protocol) and SOAP (Simple Object Access Protocol) based on XML.

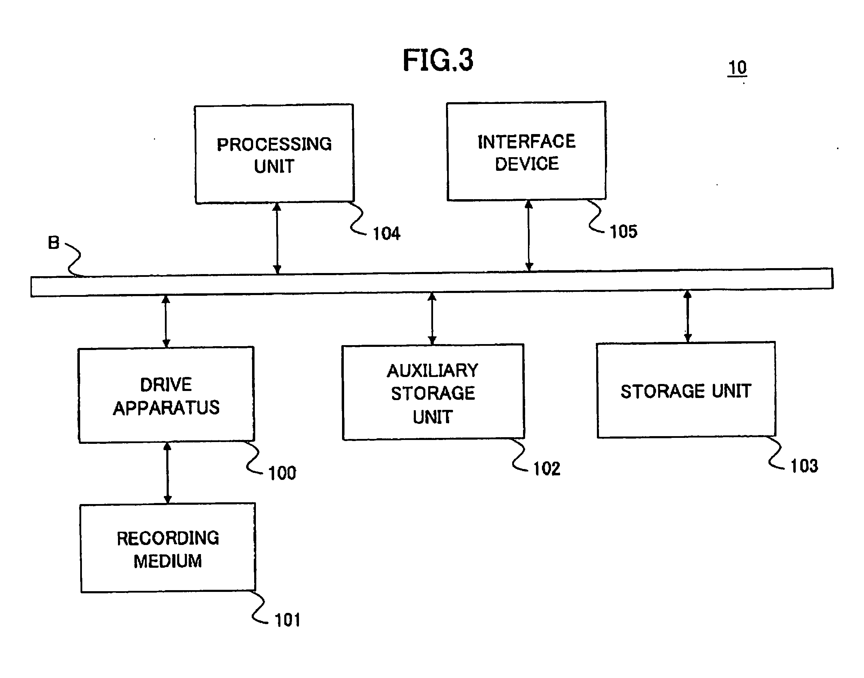

Fig. 3 shows an example of hardware configuration of the security attribute estimating server 10.

The security attribute estimating server 10 includes a drive apparatus 100, an auxiliary storage unit 102, a storage unit 103, a processing unit 104, and an interface device 105, all of which are connected by a bus B.

The program for operating the security attribute estimating server 10 is provided by a recording medium 101, such as a CD-ROM. When the recording medium 101 that contains the program is loaded in the drive apparatus 100, the program is copied from the recording medium 101 and installed in the auxiliary storage unit 102 through the drive apparatus 100.

The auxiliary storage unit 102 stores a required file, required data, and so on in addition to storing the installed program. The storage unit 103 reads the program from the auxiliary storage unit 102 and temporarily stores it, when a direction to start the program is provided. The processing unit 104 performs functions for operating the security attribute estimating server 10 according to the program temporarily stored in the storage unit 103. The interface device 105 is for interfacing to a network.

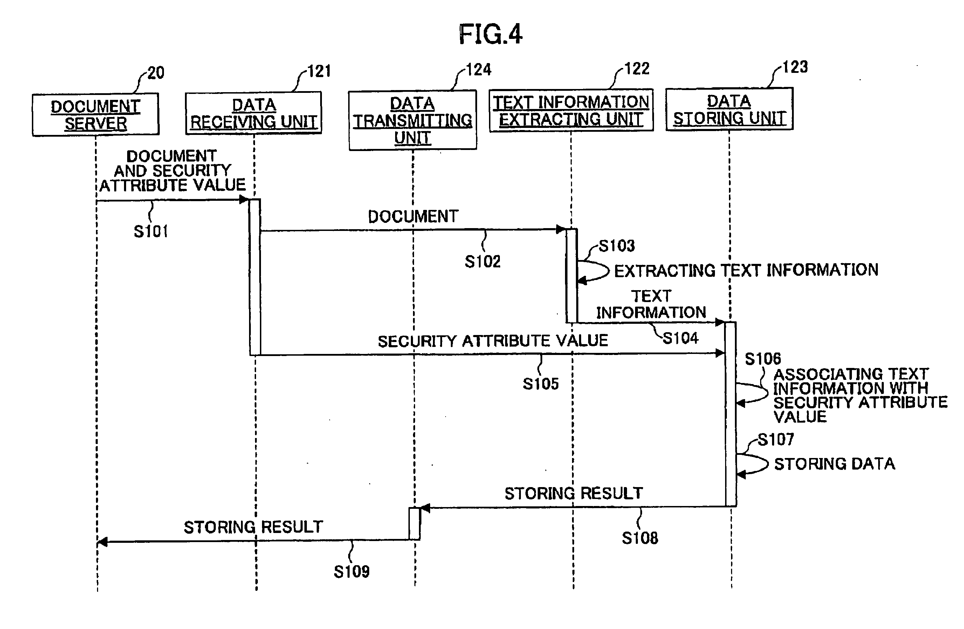

Hereafter, an operational process of the security management system 1 is described. Fig. 4 is a sequence diagram for explaining the process when uploading a document and a security attribute value from the document server20.

At step S101, the document server 20 provides a document and its security attribute value to the security attribute estimating server 10. Step S101 is performed as required, e.g., when a document is uploaded to the document server 20, when a document stored in the document DB 21 of the document server 20 is updated, and at a predetermined timing. Further, the number of the documents to be provided at this step is not restricted to one, but two or more documents and their corresponding security attribute values may be provided.

The data receiving unit 121 of the security attribute estimating server 10 receives the document and its security attribute value, outputs the document to the text information extracting unit 122 (S102), and outputs the security attribute value to the data storing unit 123 (S105). The text information extracting unit 122 extracts text information from the document received (S103), and outputs the extracted text information of the document to the data storing unit 123 (S104).

The data storing unit 123 associates the text information received from the text information extracting unit 122 with the security attribute value received from the data receiving unit 121 (S106), and stores the text information and the associated security attribute value in the text information DB 11 (S107). Further, information indicating a process result (storing result), for example, normal termination or abnormal termination, is provided to the data transmitting unit 124 (S108). Then, the data transmitting unit 124 provides the storing result to the document server 20 (S109), and the process is finished.

As described above, the text information is beforehand extracted from the document stored in the document server 20, and is stored in the text information DB 11, the extracted text information of the document being associated with the security attribute value. For this reason, it is not necessary to read the document from the document server 20 and to extract the text information from the document every time the process of estimating a security attribute value (described below) is performed. Accordingly, the process of estimating security attribute value is accelerated.

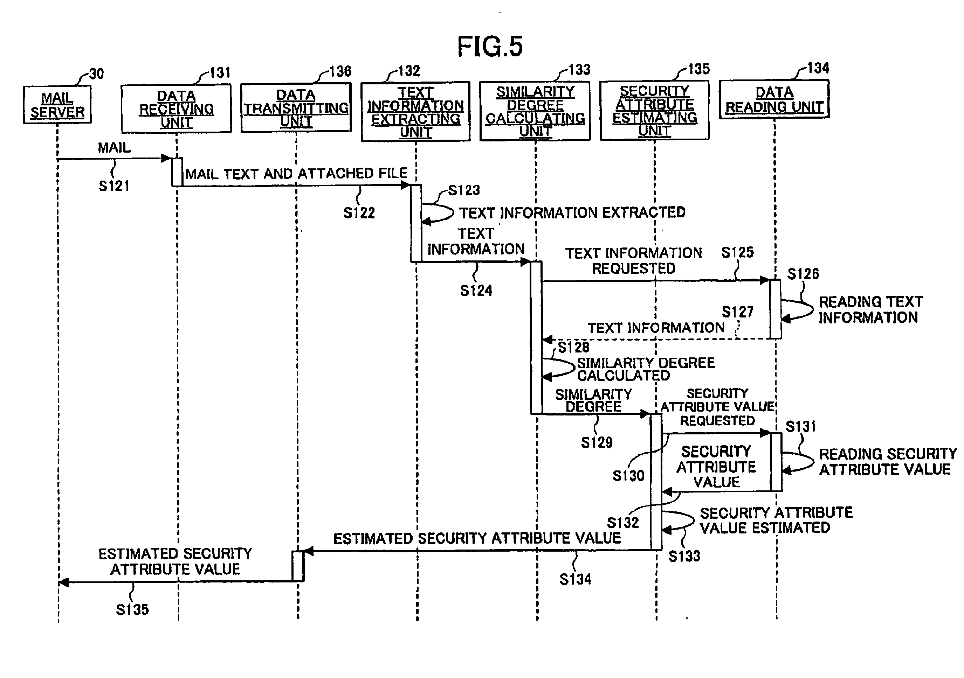

Next, a process of estimating the security attribute value of target text is described with reference to Fig. 5, wherein the security attribute estimating server 10 estimates the security attribute value of the target text, which in this case is mail text and an attached file thereto provided by the mail server 30, based on the stored text and its security attribute value stored in the text information DB 11. The mail text and the attached file that are provided by the mail server 30 serve as the target information on which the process is performed.

At step S121, the mail server 30 provides the security attribute estimating server 10 with the mail text and the attached file thereto that are requested by the client 31 and a request for estimating (estimation request) the security attribute value thereof.

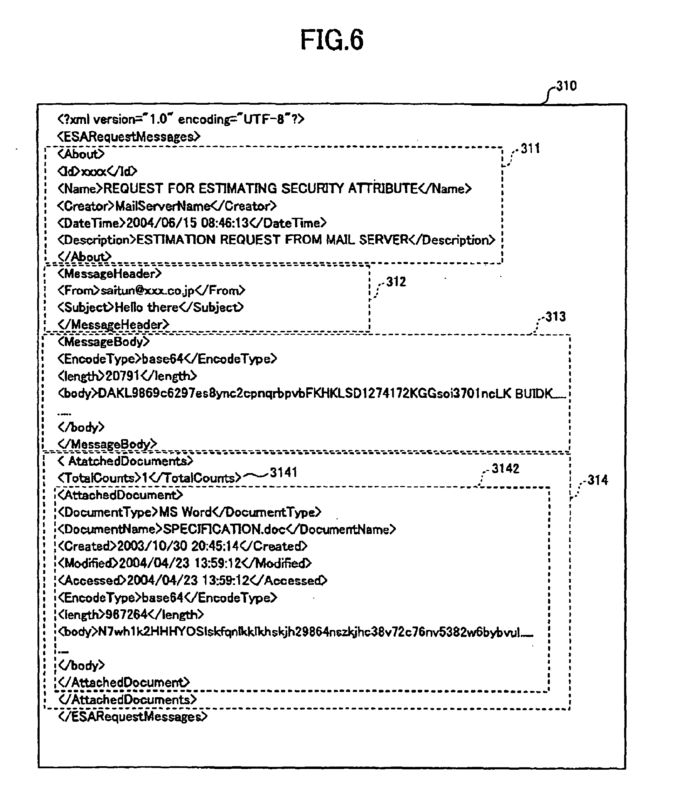

The estimation request (estimation request information 310) is shown in Fig. 6, wherein the communications between the mail server 30 and the data receiving unit 131 are assumed to be performed in SOAP. Accordingly, information included in the estimation request is expressed in XML. Here, Fig. 6 does not show the SOAP message itself, but the information extracted from the SOAP message is shown.

As shown in Fig. 6, the estimation request information 310 includes an "About" element 311 surrounded by <About> tags, a "MessageHeader" element 312 surrounded by <MessageHeader> tags, a "MessageBody" element 313 surrounded by <MessageBody> tags, and an "AttachedDocuments" element 314 surrounded by <AttachedDocuments> tags.

The About element 311 describes the outline of the estimation request, and includes an ID of the estimation request that is surrounded by <Id> tags, the name of the estimation request, i.e., "Estimation request of security attribute" that is surrounded by <Name> tags, the name of the maker of the estimation request, i.e., the host name of the mail server 30, that is surrounded by <Creator> tags, date and time when the estimation request is made that are surrounded by <DateTime> tags, and a description of the estimation request that is surrounded by <Description> tags.

The MessageHeader element 312 describes information about the header information of the mail. Therein, the address of the sender of the mail is surrounded by <From> tags, and the subject name of the mail is surrounded by <Subject> tags.

The MessageBody element 313 describes information about the mail text. Therein, an encoding type of the mail text is surrounded by <EncodeType> tags, the length of the mail text is surrounded by <length> tags, and the mail text is surrounded <body> tags.

The AttachedDocuments element 314 describes information about an attached file. Therein, the number of attached files is surrounded by <TotalCounts> tags, and an AttachedDocument element 3142 for every attached file is surrounded by <AttachedDocument> tags.

The AttachedDocument element 3142 includes <DocumentType> tags that surround the type of the attached file, <DocumentName> tags that surround the file name of the attached file, <Created> tags that surround date and time of creation of the attached file, <Modified> tags that surround date and time of modification to the attached file, <EncodeType> tags that surround the encoding type of the attached file, <length> tags that surround the length of the attached file, and <body> tags that surround the contents of the attached file.

Progressing to Step S122 following Step S121, the data receiving unit 131 of the security attribute estimating server 10 provides the mail text and the attached file received from the mail server 30 to the text information extracting unit 132. The text information extracting unit 132 extracts text information from the mail text and the attached file (S123), and provides the extracted text information (target text) to the similarity degree calculating unit 133 (S124). When the similarity degree calculating unit 133 requests the data reading unit 134 to read
the stored text of a document (S125), the data reading unit 134 reads the stored text of one or more documents from the text information DB 11 (S126),
and outputs the read stored text to the similarity degree calculating unit 133 (S127).

The similarity degree calculating unit 133 calculates the degree of similarity between the target text and the stored text of each document (S128), and outputs the calculated degree of similarity to the security attribute value estimating unit 135 (S129) Based on the degree of similarity, the security attribute estimating unit 135 selects a subset of text out of the stored text as "reference stored text" that is to be referenced when estimating the security attribute value of the target text, and requests the data reading unit 134 to read the security attribute value of the reference stored text (S130). Here, the number of the subsets of the reference stored text is not limited to one,
but two or more subsets of reference stored text may be used as described belpw.

The data reading unit 134 reads the security attribute value that is associated with the reference stored text from the text information DB 11 (S131), and outputs the security attribute value to the security attribute estimating unit 135 (S132). The security attribute estimating unit 135 estimates the security attribute value of the target text according to a predetermined method (estimating method) based on the read security attribute (S133). Then, the estimated security attribute value of the target text is provided to the data transmitting unit 136 (S134). The data transmitting unit 136 provides the estimated security attribute value to the mail server 30 (S135), and this process is finished.

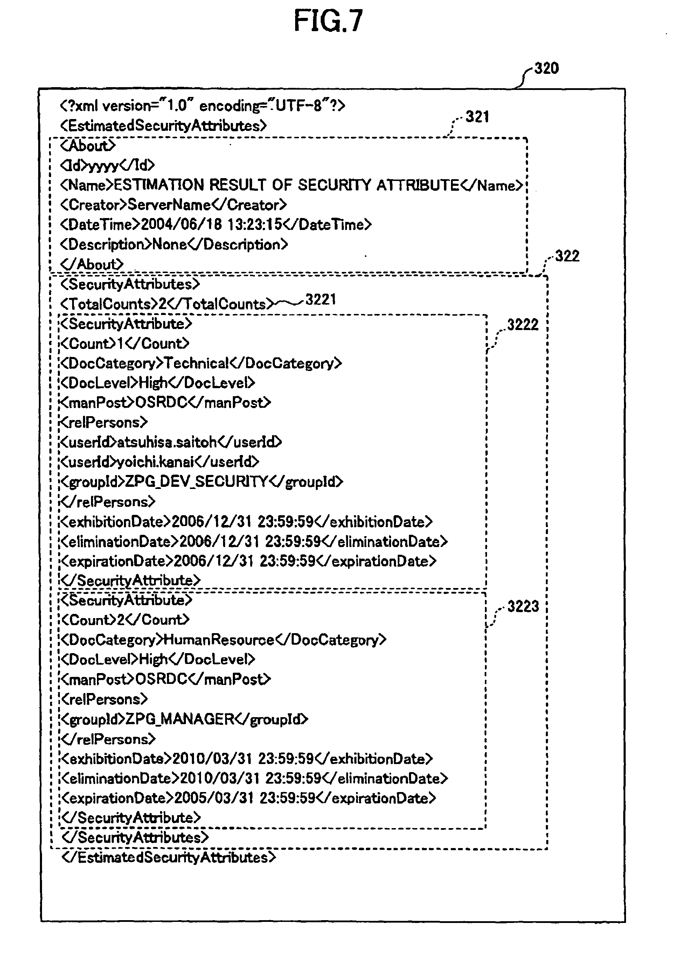

Fig. 7 shows estimated result information 320 serving as the estimated result of the security attribute value. Fig. 7 does not show the SOAP message itself, but the information extracted from the SOAP message is shown, as is the case with Fig. 6.

In Fig. 7, the estimated result information 320 includes an About element 321 surrounded by <About> tags, and a SecurityAttributes element 322 surrounded by <SecurityAttributes> tags. The About element 321 is an element that describes the outline of the estimated result, and since its contents are the same as the About element 311 (Fig. 6), the explanation is not repeated.

The SecurityAttributes element 322 provides information about the estimated security attribute value. The SecurityAttributes element 322 includes the number of the SecurityAttribute elements (described below) that is surrounded by <TotalCounts> tags (3221), and one or more SecurityAttribute elements that are surrounded by corresponding <SecurityAttribute> tags (3222 and 3223).

Each of the SecurityAttribute elements 3222 and 3223 describes the security attribute value associated with corresponding reference stored text. Each of the SecurityAttribute elements 3222 and 3223 includes
document category of the reference stored text surrounded by <DocCategory> tags,
secrecy level of the reference stored text surrounded by <DocLevel> tags,
affiliation of the reference stored text surrounded by <manPost> tags
a user ID and group ID of persons involved and persons concerned with the reference stored text, surrounded by <relPersons> tags,
secrecy maintenance term of the reference stored text surrounded by <exhibitionDate> tags,
storing term of the reference stored text surrounded by <eliminationDate> tags, and
term of validity of the reference stored text surrounded by <expirationDate> tags.

The mail server 30 receives the estimated result information 320 as shown in Fig. 7, and performs as follows based on the estimated security attribute value, namely:
receiving access privilege information of the document that has the security attribute value,
determining access permission,
notifying a documentation manager of the estimated result, and
controlling a process triggered by the Request to Send a mail using a response to the notification. For example, the control is such that the mail may be deleted, a copy of the mail may be sent to the documentation manager, the copy of mail may be saved being associated with a log, warning may be provided to the documentation manager, and warning may be provided to the sender of the mail. Any one or any combination of above items may be performed.

For calculating the degree of similarity between the target text and each document constituting the stored text (S128 in Fig. 5), the similarity degree calculating unit 133 can use various well-known technologies; e.g., the following method may be used.

First, the target text is divided into one or more blocks (key blocks). Then, it is determined whether each key block is included in the stored text. As for dividing the target text into the key blocks, the following methods, for example, are conceivable,
(1) making the entirety of the target text as one key block, and determining whether the character string that constitutes the key block (i.e. the whole sentence of the target text) is contained in the stored text,
(2) dividing the target text at every new-line code, and determining whether the character string that constitutes each key block is contained in the stored text,
(3) dividing the target text at every punctuation mark (such as a period, a comma, a colon, a semicolon, and quotation marks), and determining whether the character string that constitutes each key block is contained in the stored text, and
(4) dividing the target text at every tab and space, and determining whether the character string that constitutes each key block is contained in the stored text.

As for the dividing methods above, any one or any combination thereof may be performed. Further, rather than the dividing method described above, each key block may be defined as including only a noun that is extracted from the target text by morphological analysis.

The degree of similarity is obtained by the following formula using determination results of the key blocks described above. $Si = \frac{{\sum }_{i = 1}^{B ⁢ F} \left\{WBj\times BAij\right\}}{WAi} \left(i≃1,…,N\right)$
where
Si: Degree of similarity to the i-th in the stored text
BF: Number of key blocks extracted from the target text
WBⱼ: Number of characters of the j-th key block
BAᵢⱼ: Number of the j-th key blocks contained in the i-th document constituting the stored text
WAi: Number of characters of the i-th document constituting the stored text
N: Number of documents stored as the stored text in the text information DB 11.

Here, in the case where the above (1) is adopted (i.e., when the whole target text is made into one key block), for example, if the contents of the stored text are copied in whole to one of the mail text and the attached file, the degree of similarity is "1".

Further, methods of estimating the security attribute value by the security attribute estimating unit 135 (S133 in Fig. 5) include such as follows.
(1) Use the security attribute value of a document constituting the stored text that has the greatest degree of similarity as the security attribute value of the target text.
(2) Use the severest security attribute value as the security attribute value of the target text out of several security attribute values of documents in the stored text having greater degrees of similarity.
(3) Use an average of several security attribute values of several documents in the stored text having greater degrees of similarity as the security attribute value of the target text.
(4) Provide a list of several security attribute values of documents in the stored text having greater degrees of similarity as the security attribute value of the target text. That is, two or more candidates of the security attribute values are provided to a subsequent process (e.g., the mail server 30 in this case) so that the subsequent process performs estimation. The estimated result information 320 shown in Fig. 7 represents this case of (4).

As for the methods of estimating the security attribute value (1) through (4) above, any one can be used; and any one can be selected for each security attribute. For example, when secrecy levels are defined as level 1, level 2, and level 3, the methods (2) and (3) are often desired. When the secrecy maintenance term, the term of validity, and the storing term are to be considered, the method (2) is often desired. Further, when the affiliation, the type, the persons concerned, and the related group are to be considered, the methods (1) and (4) are often desirable.

Further, a user can select the estimating method of security attribute value by providing a GUI (Graphical User Interface) as follows.

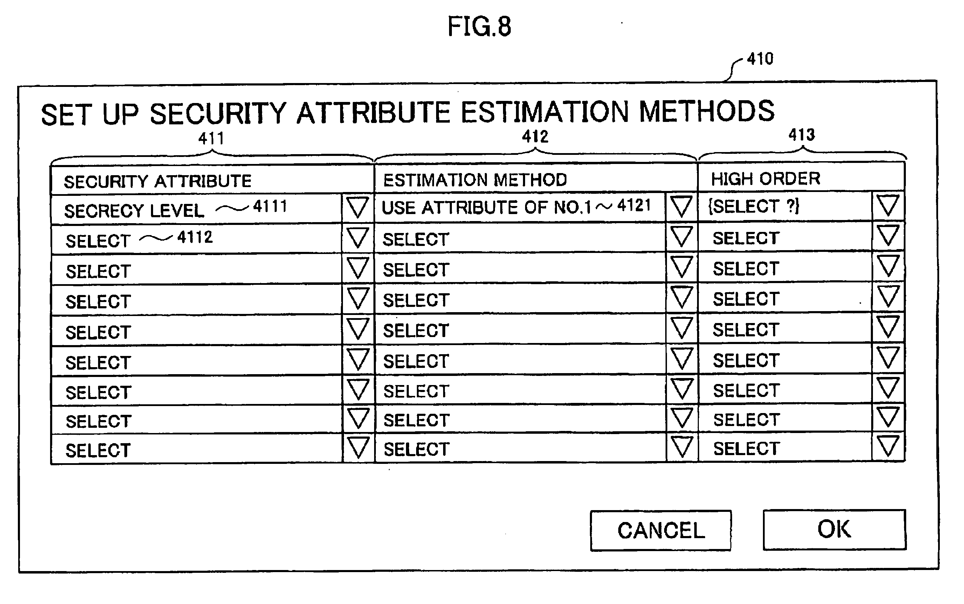

Fig. 8 shows a display example of a security attribute estimating method setting screen 410, wherein a column 411 includes combo-boxes for the user to choose a security attribute to which an estimating method is to be assigned, a column 412 includes combo-boxes for the user to choose an estimating method, and a column 413 includes combo-boxes for the user to choose a definition of "Higher order". In Fig. 8, "Secrecy level" is selected at a combo-box 4111, and "use attribute of No. 1" is selected at a combo-box 4121. That is, the estimating method of the secrecy level is defined such that the secrecy level of the stored text that has the greatest degree of similarity is used as the secrecy level of the target text.

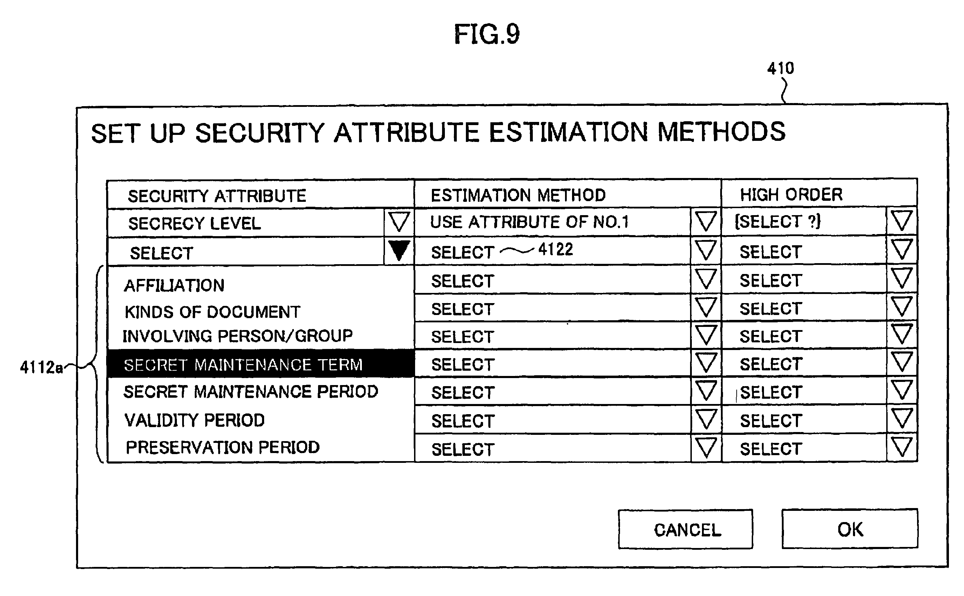

When defining the estimating method of another security attribute, a combo-box 4112 is clicked, then the security attribute estimating method setting screen 410 displays as shown in Fig. 9.

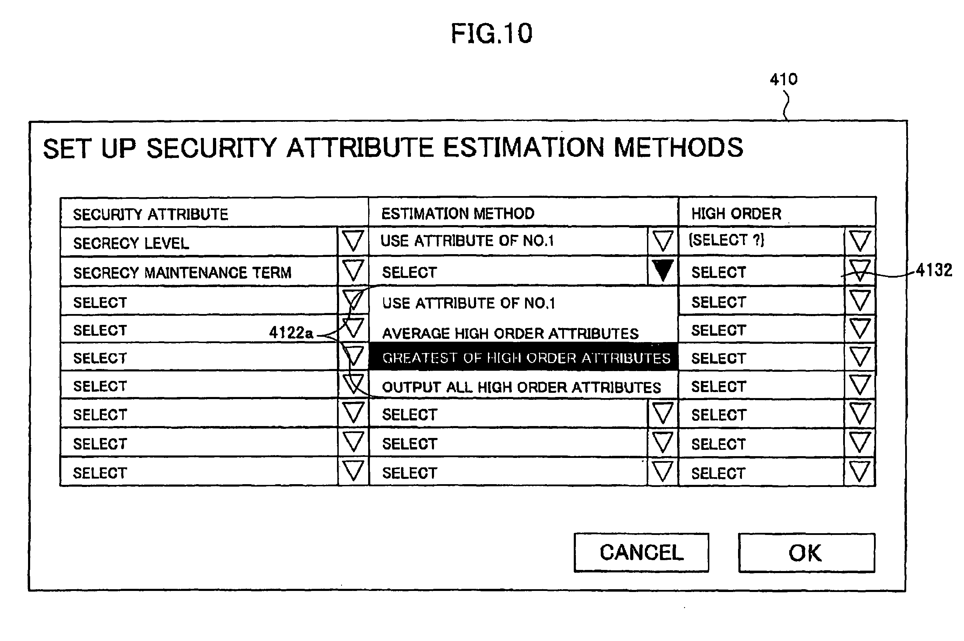

Fig. 9 shows the security attribute estimating method setting screen 410, wherein a security attribute for which an estimating method is to be selected is being selected. If the combo-box 4112 is clicked, a pull-down list 4112a is displayed as shown in Fig. 9. The pull-down list 4112a shows security attributes, and one for which the estimating method is to be defined is selected from the list. For example, if "Secret maintenance term" is selected at the pull-down list 4112a, and a combo-box 4122 is clicked, the security attribute estimating method setting screen 410 appears as shown in Fig. 10.

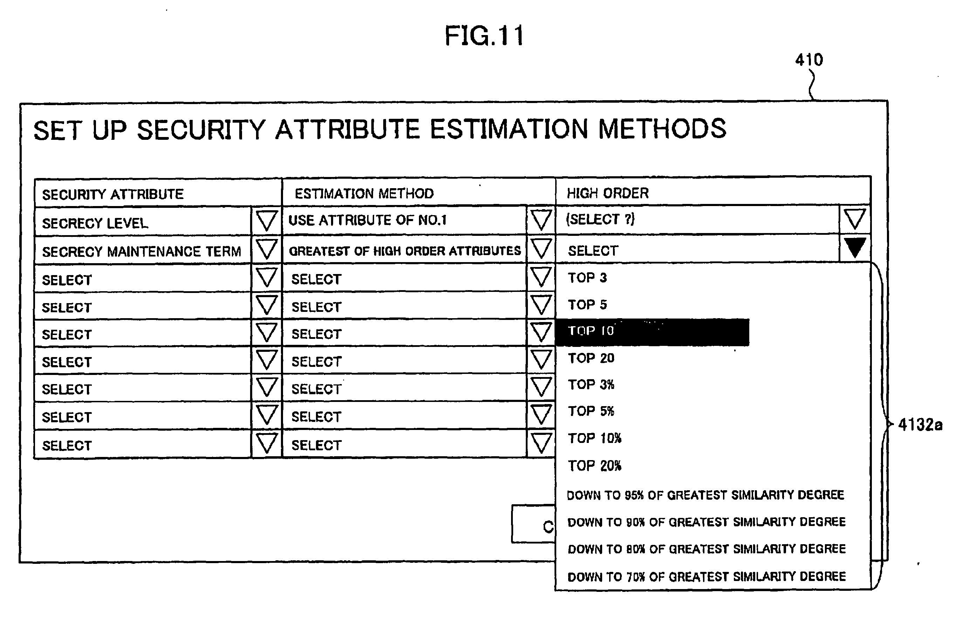

Fig. 10 shows the security attribute estimating method setting screen 410, wherein an estimating method is being selected. If a combo-box 4122 is clicked, a pull-down list 4122a is displayed as shown in Fig. 10. The pull-down list 4122a shows estimating methods, and the user is to select an estimating method from the list. If, for example, "The highest value of the attribute values of higher order" is selected at the pull-down list 4122a, and if a combo-box 4132 is clicked, the security attribute estimating method setting screen 410 appears as shown in Fig. 11.

Fig. 11 shows the security attribute estimating method setting screen 410, wherein "The highest value of the attribute values of higher order" has selected; because the combo-box 4132 has been clicked, a pull-down list 4132a is displayed as shown in Fig. 11, such that a definition of "Higher order" is selected. The pull-down list 4132a provides choices of definitions of "Higher order". If, for example, "10 highest order" is selected from the pull-down list 4132a, the greatest attribute value out of attribute values of ten documents in the stored text whose degrees of similarity are the greatest is selected as the attribute value of "Secret maintenance term".

As described above, the mail text and the attached file thereto that have no security information such as access permission are assigned the security information that is the same as that of the document having similar contents. Therefore, for example, when a mail with contents similar to the contents of a stored document is requested, suitable control is performed based on the security information of the stored document in addition to which a stored document can be posted with the suitable control.

Next, a security attribute value of a shared document is estimated. Here, the shared document is a document that is posted at a place that can be referenced by two or more persons for information sharing.

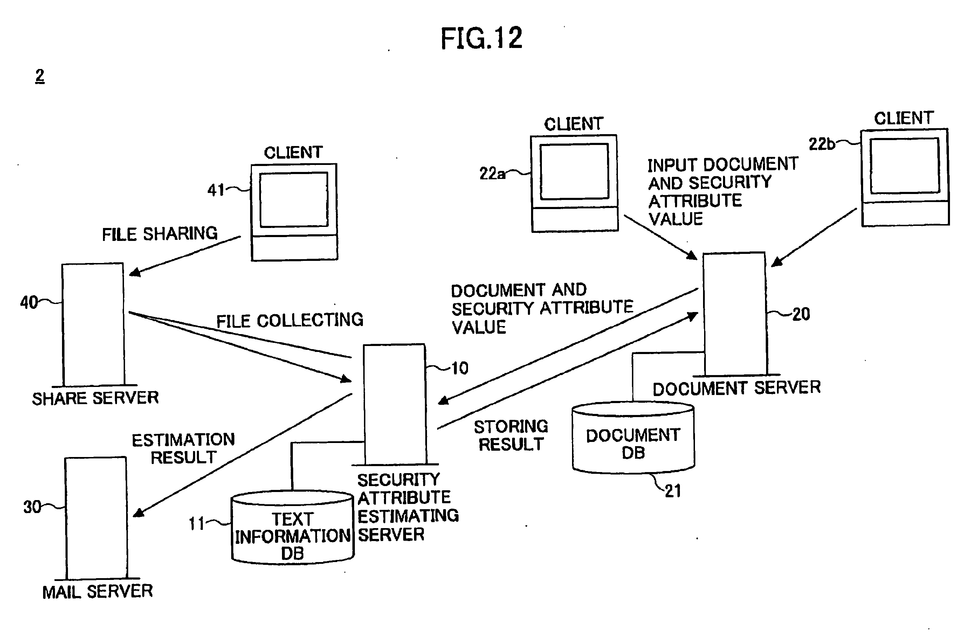

Fig. 12 shows an example of a security management system 2, The same reference numbers are given to the same portions as Fig. 1, and the explanations thereof are not repeated. The security management system 2 in Fig. 12 includes a share server 40 in addition to the security management system 1 shown in Fig. 1. The share server 40 is for providing a shared document uploaded from a client such as a client 41 to a network. The share server 40 makes the shared document available to the network by placing the shared document at a share folder.

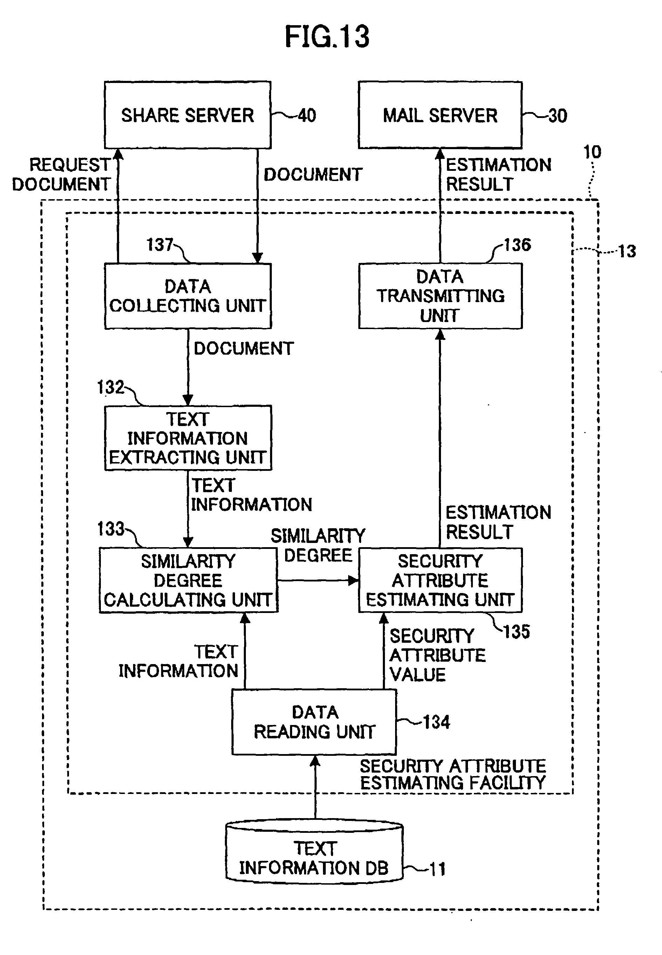

Fig. 13 shows an example of a functional configuration of the security attribute estimating server 10.

The same reference numbers are given to the same portions as Fig. 2, and the explanations thereof are not repeated. In comparison with Fig. 2, the security attribute estimating facility 13 of the security attribute estimating server 10 shown in Fig. 13 includes a data collecting unit 137 instead of the data receiving unit 131 of Fig. 2.

The data collecting unit 137 is for collecting shared documents in the security attribute estimating server 10. In addition, the security attribute estimating server 10 includes the text information storing facility 12 that is the same as shown in Fig. 2, illustration of which in Fig. 13 is omitted.

Next, an operational process of the security management system 2 is described. The process of uploading document and security information from the document server 20 is the same as Fig. 4. Then, a process of estimating security attribute value is described.

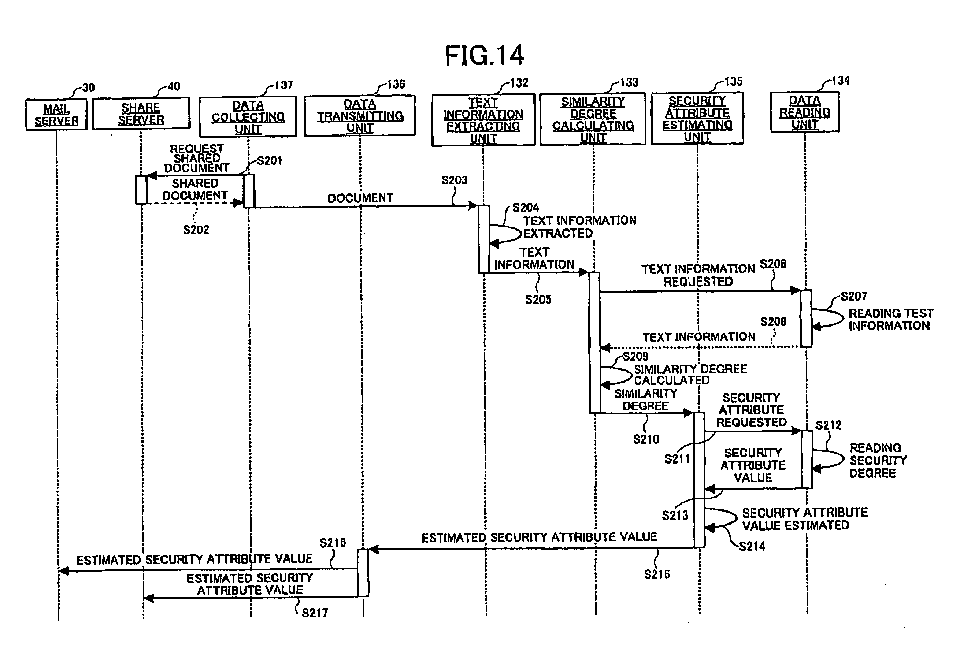

Fig. 14 is a sequence diagram of the process of estimating the security attribute value of target information.

Here, the shared document collected from the share server 40 represents the target information.

At step S201, the data collecting unit 137 of the security attribute estimating server 10 requests a shared document by accessing the share folder of the share server 40, and acquires the same (S202). The data collecting process of shared documents may be performed as desired, e.g., periodically at a predetermined interval, and when detecting a shared document being uploaded from a client such as the client 41 to the share server 40. If the data collecting process is to be periodically performed, it is desirable that the predetermined period be as short as possible so that a period during which a document that should not be published is available as a shared document is made as short as possible.

The data collecting unit 137 provides the acquired shared document to the text information extracting unit 132 (S203). Steps S204 through S215 are the same as steps S123 through S135, whereby the text information is extracted (target text) from the shared document, the degree of similarity of the text information (target text) is determined with reference to each document in the stored text, the security attribute value of the shared document is estimated, and so on. A result of the estimation is provided to the mail server 30 (S216).

The mail server 30 having received the estimated result may leave the handling of the shared document to the manager by transmitting a mail that includes the estimated result to the manager. In this case, the manager can control the shared document such as deleting it from the share server 40.

Further, as shown at step S217, the estimated result may be provided to the share server 40. In this case, the share server 40 is capable of receiving access privilege information of a document that has a security attribute value based on the estimated security attribute value, determining access permission, automatically deleting a shared document based on the determination, and saving the shared document with an associated log being generated. The share server 40 may perform any one of or any combination of these functions.

Logon to the share server 40 is required before accessing the share folder at Step S201 from the data collecting unit 137. Specifically, the logon is carried out by a domain user or a user with permission to access the share server 40. Practically, in a network of a corporation, wherein domain management is carried out, it is general practice that a domain manager logs on with its authority.

Further, when there are two or more share servers 40, and a specific share server 40 cannot be beforehand identified, the security attribute estimating server 10 acquires a list of the share servers 40 by sending a "broadcast" to the network such that a share folder is located, and then requests the list of share folders (for which access permission has been obtained) of each share server 40. Then, a folder with access permission is monitored; when a folder is newly created, a shared document is created by uploading, and so on, such activities are detected. When it is detected that a shared document is created, the security attribute estimating server 10 acquires a copy thereof.

As described above, according to the security management system 2, a shared document, to which no security information, such as access permission, is assigned can be provided with security information that is the same as the similar stored document. In this way, when a document having no security information is to be published, security information of the similar document in the stored text is assigned, providing appropriate control of the document in addition to the appropriate control being provided to the stored document based on the security information assigned to the stored document.

Here, the share server 40 does not have to be a mere file server, but it can be, e.g., a FTP (File Transfer Protocol) server, a Web server, and the like that publishes information on the Internet. In this case, the danger of information being leaked all over the world through the Internet can be effectively prevented from occurring.

Next, a security management system 3 according to an Embodiment of the present invention is described, wherein the security attribute value of image data is estimated, the image data being scanned by such as a scanner, a copying machine, and a multifunctional machine.

Fig. 15 shows a structure example of the security management system 3. The same reference numbers are given to the same portions as Fig.1, and the explanations thereof are not repeated. The security management system 3 of Fig. 15 includes a multifunctional machine 50 in place of the mail server 30 shown in Fig. 1. The multifunctional machine 50 is a device that functions as a printer, a FAX, a copy, and a scanner in one entity. However, all the functions are not required for the purpose of the present embodiment, but the multifunctional machine may be of any one function.

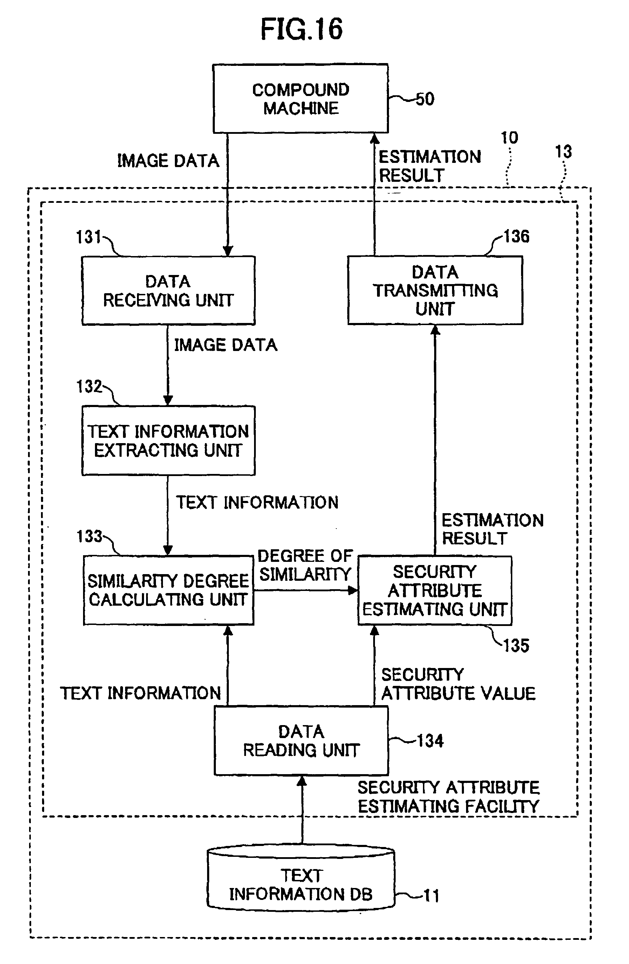

Fig. 16 shows an example of functional configuration of the security attribute estimating server 10 according to an Embodiment of the present invention. The same reference numbers are given to the same portion as Fig. 2, and the explanations thereof are not repeated. The configuration shown in Fig. 16 is the same as that of Fig. 2. However, the data that the data receiving unit 131 receives according to the Embodiment are image data.

In addition, according to the present invention, although illustration is omitted in Fig. 16, the text information storing facility 12 that is the same as shown in Fig. 2 is employed.

Next, an operational process of the security management system 3 is described. According to the present invention, the process of uploading a document and security information from the document server 20 is the same as that shown in Fig. 4. Then, the process of estimating a security attribute value is described.

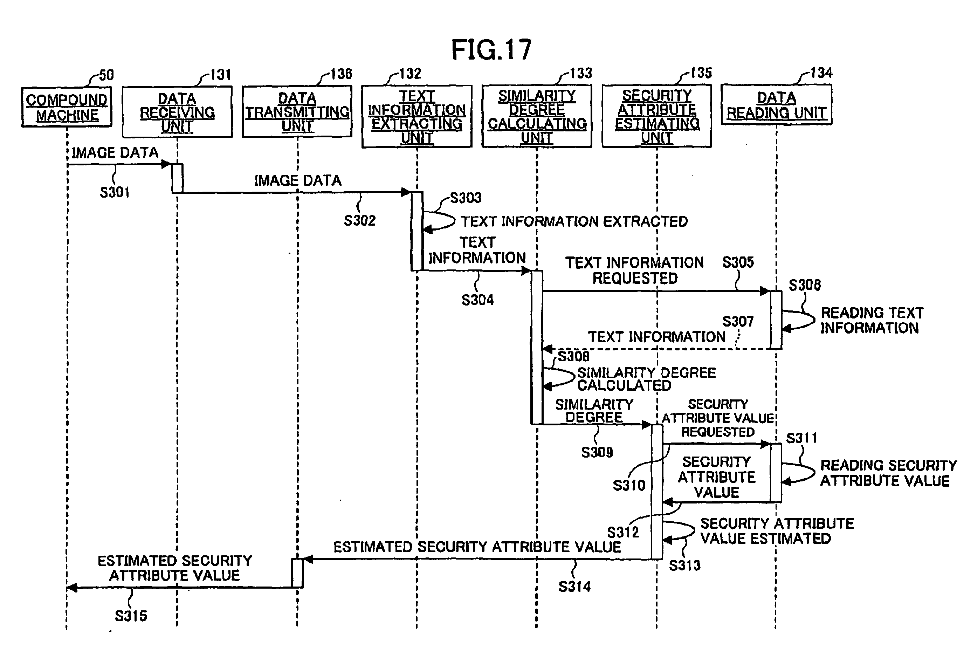

Fig. 17 is a sequence diagram for estimating the security attribute value of target information according to an illustratrial example.

The target information is the image data provided by the multifunctional machine 50.

At step S301, the multifunctional machine 50 provides a request for estimating the security attribute value of the image data to the data receiving unit 131 of the security attribute estimating server 10 with the image data obtained by scanning. The image data may be provided in sync with scanning, or alternatively, at a predetermined interval in consideration of the image data being stored to some extent; further, two or more sets of image data may be provided at a predetermined interval.

The data receiving unit 131 receives the image data and outputs the image data to the text information extracting unit 132 (S302). Henceforth, at steps S315 through S303, extraction of text information from the image data, calculation of the degree of similarity between the extracted text information (target text) and each document in the stored text, estimating of the security attribute value of the image data, and so on are performed as at the steps S123 through S135, and an estimated result is provided to the multifunctional machine 50.

The multifunctional machine 50 receives the estimated result, and based on the estimated security attribute value, receives access privilege information of a document that has the security attribute value, and autonomously determines access permission; or alternatively, notifies the documentation manager of the estimated result, and controls the process of copying and scanning demand using a response from the manager. For example, the image data that are scanned may be deleted, copying may be stopped, the image data may be provided to the manager, the image data may be saved being associated with a log, warning may be provided to the manager, and warning may be displayed on a control panel. Any one of above functions or any combination thereof may be performed.

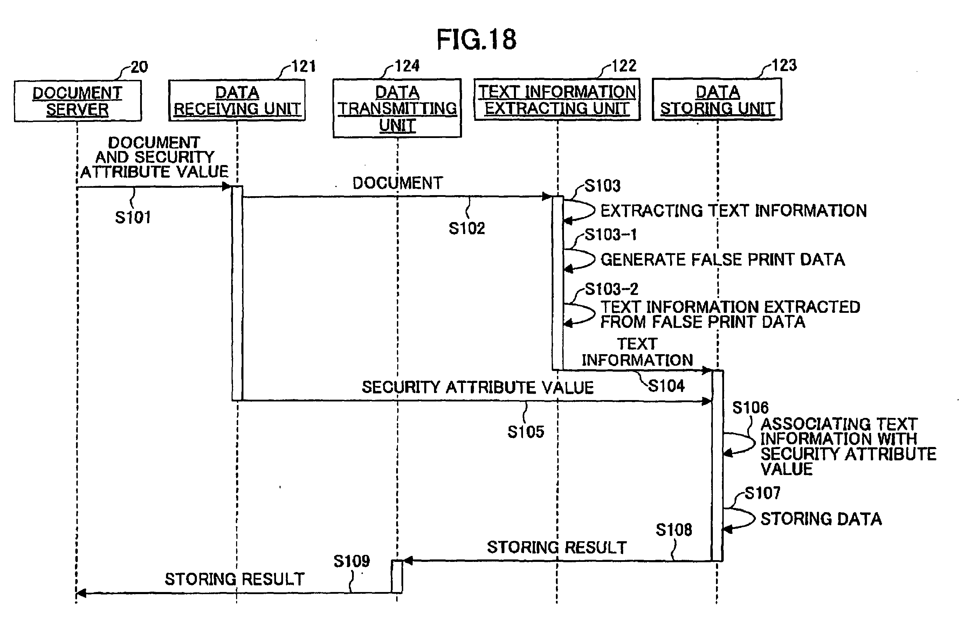

Here, extraction of the text information from the image data at step S303 can be carried out using an OCR (Optical Character Recognition) technology that is generally available. However, since there is a probability of incorrect recognition by the OCR, the degree of similarity may contain errors, the degree of similarity being calculated by comparing the target text extracted by OCR with the stored text that is extracted from a document that is prepared by, e.g., word-processing software and stored. In order to cope with this problem, the process of uploading the document and security information from the document server 20 according to the present invention is arranged as shown in Fig. 18, which is called the second uploading method.

Fig. 18 is a sequence diagram for explaining the uploading method of uploading the document and security attribute value from the document server 20 according to the present invention. The same reference numbers are given to the same steps as Fig. 4, and the explanations thereof are not repeated.

In Fig. 18, step S103 1 and S103-2 are added. That is, the text information extracting unit 122 generates false print data (raster data) based on the document received from the data receiving unit 121 (S103-1), and extracts text information from the false print data using OCR (S103-2).

In this case, two sets of text information, i.e., one extracted at step S103, and the other extracted at step S103-2, are present. Both sets are stored in the text information DB 11 with a security attribute value being associated therewith.

Here, the OCR engine used at step S103-2 is desirably the same as the OCR engine used at S303 of Fig. 17 for extracting the text information from the image data received from the multifunctional machine 50. This is because, if both are the same, the probability of the text information acquired as a result of incorrect recognition being the same is high; and the probability of obtaining reasonable values in calculation of the degree of similarity of the text information acquired from each text information set is high.

As described above, according to the security management system 3 according to the present invention, image data, to which security information such as access permission, has not been assigned are assigned security information that is the same as that of a similar stored document. In this way, when a manuscript having contents similar to contents of a stored document is to be scanned, appropriate control is obtained based on the security information assigned to the similar stored document. In addition, the appropriate control is obtained when the stored document is to be scanned.

By the way, although the document provided by the document server 20 of the security attribute estimating server 10 is described as being stored as text information, the document may be stored as image information. Hereafter, this case is described.

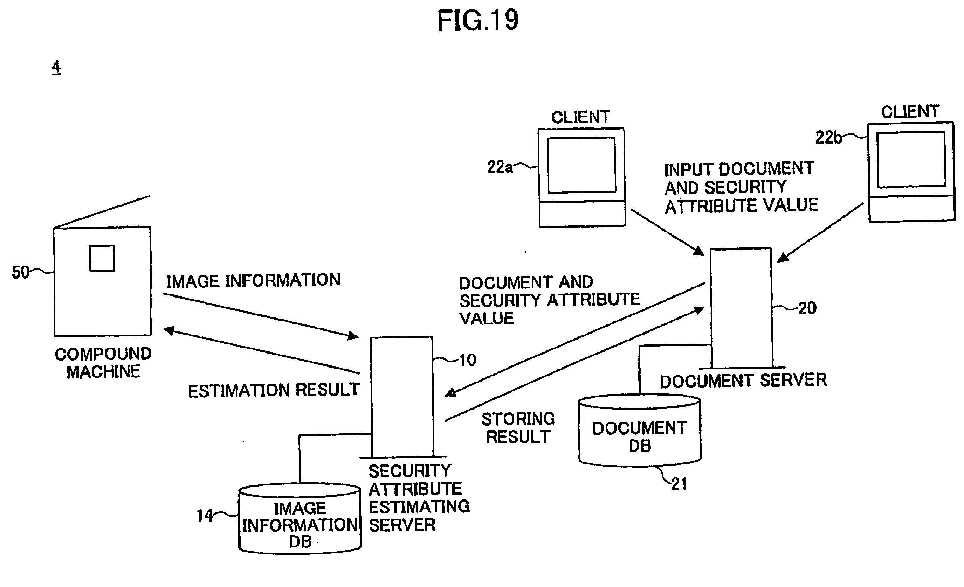

Fig. 19 shows an example of a security management system 4. The security attribute estimating server 10 includes an image information DB 14 instead of the text information DB 11. In Fig. 19, the same reference numbers are given to the same portions as Fig. 15, and the explanations thereof are not repeated. The image information DB 14 is a database that stores the image information generated based on the document provided by the document server 20, and the security attribute value that is associated with the document.

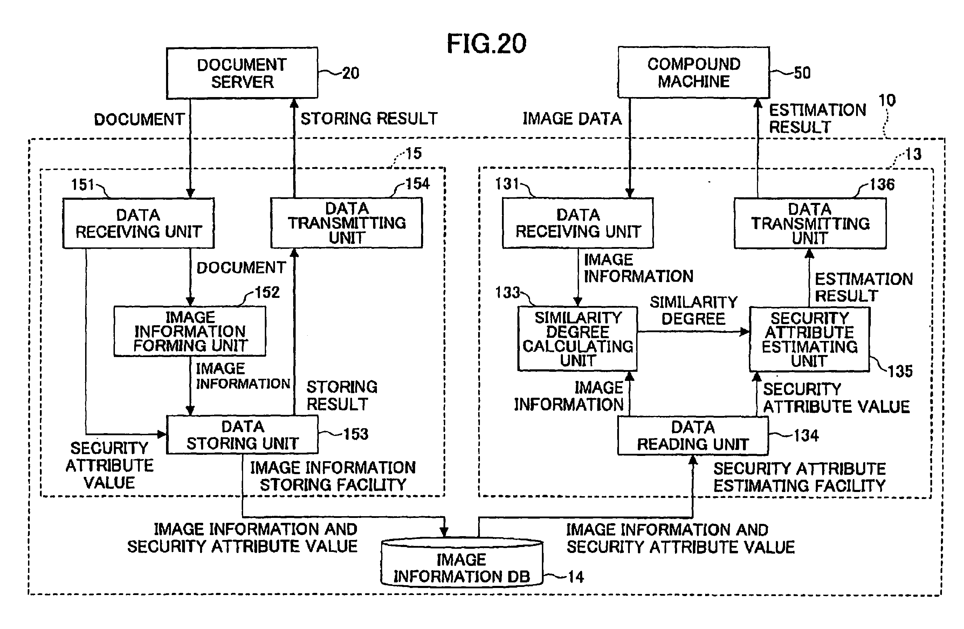

Fig. 20 shows an example of functional configuration of the security attribute estimating server 10.

The same reference numbers are given to the same portions as Fig. 16, and the explanations thereof are not repeated. The security attribute estimating server 10 of Fig. 20 has an image information storing facility 15. The image information storing facility 15 corresponds to the text information storing facility 12 (Fig. 2),
and includes a data receiving unit 151, an image information forming unit 152, a data storing unit 153, and a data transmitting unit 154.

The data receiving unit 151, the data storing unit 153, and the data transmitting unit 154 function like the data receiving unit 121, the data storing unit 123, and the data transmitting unit 124, respectively, of the text information storing facility 12.

The image information forming unit 152 is for generating image information based on a document. Specifically, the image information forming unit 152 performs an image formation process of an image (image information), the same process as performed by a printer, and the like. While it may be ideal that image information forming units 152 be prepared for all conceivable printing apparatuses to which the document can be output, practically, the image information forming units 152 are prepared for typical printers (laser, ink jet, etc.) of typical makers.

Further, the security attribute estimating facility 13 in Fig. 20 does not include the text information extracting unit 132 that is included in the security attribute estimating facility 13 in Fig. 16. This is because,
image data are compared, and it is not necessary to extract text information from an image provided by the multifunctional machine 50.

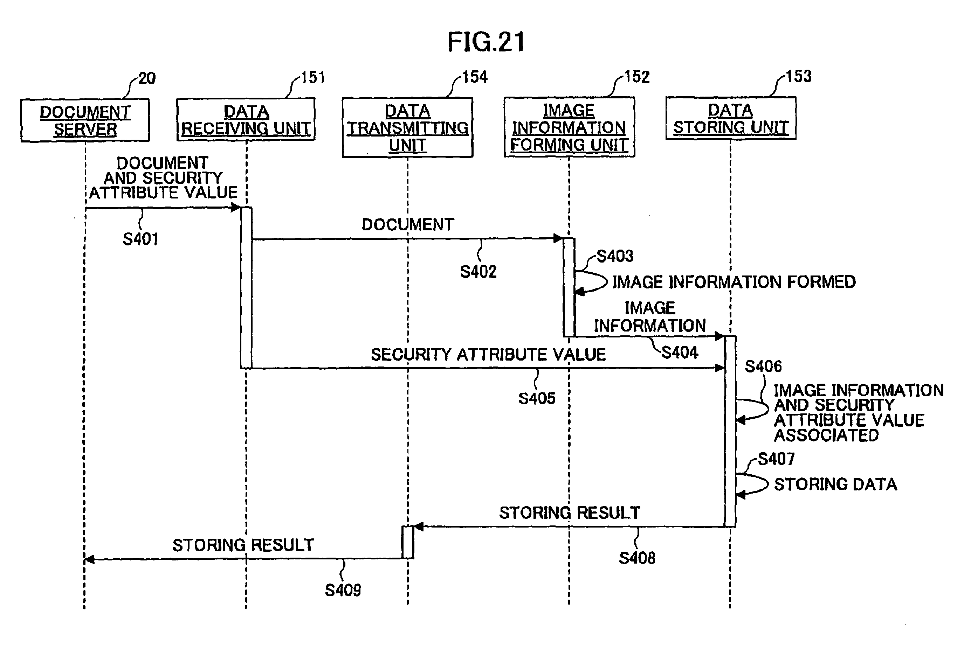

Next, an operations process of the security management system 4 is described. Fig. 21 is a sequence diagram for explaining the process when uploading a document and security attribute value from the document server.

Steps S401, S402, and S405 are almost the same as Steps S101, 5102, and S105 in Fig. 4. That is, the document and its security attribute value provided by the document server 20 are received by the data receiving unit 151. Then, the document is provided to the image information forming unit 152 (S402), and the security attribute value is provided to the data storing unit 153 (S405),

The image information forming unit 152 receives the document, generates image information of the document (S403), and outputs the generated image information to the data storing unit 153 (S404).

The data storing unit 153 associates the image information received from the image information forming unit 152 with the security attribute value received from the data receiving unit 151 (S406), and stores them in the image information DB 14 (S407). Information indicating a result of the process (storing result), for example, normal termination, and abnormal termination, is provided to the data transmitting unit 154 (S408). Then, the data transmitting unit 154 provides the storing result to the document server 20, and this process is finished.

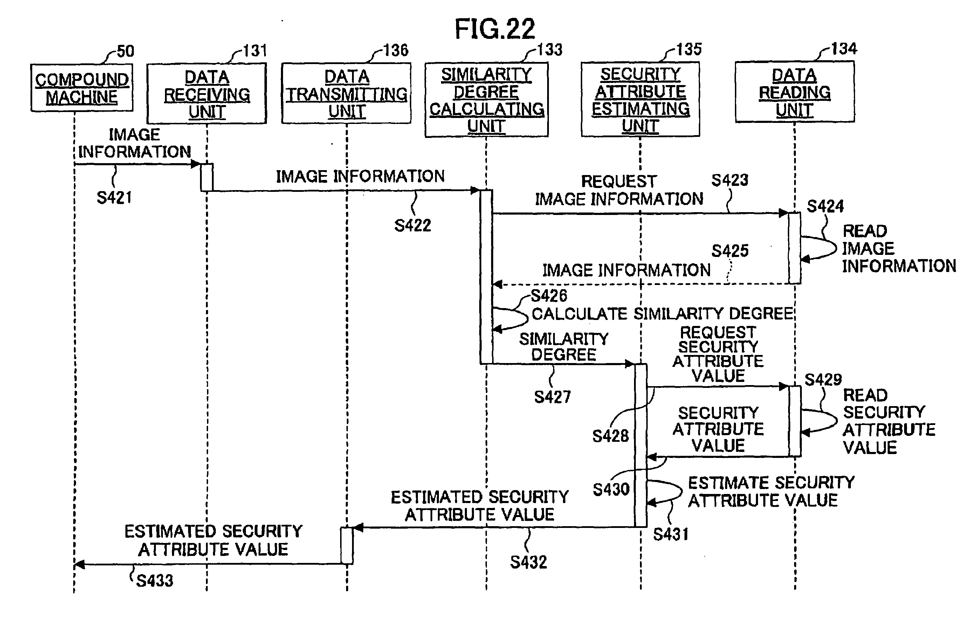

The following describes a process of estimating the security attribute value of the image data (target information) provided by the multifunctional machine 50 based on the image information stored in the image information DB 14 and the security attribute value in this way ("stored image information"), the process being carried out by the security attribute estimating server 10. Fig. 22 is a sequence diagram of the process of estimating the security attribute value of the target information. The image data provided from the multifunctional machine 50 is the target of the following operational process.

At step S421, the multifunctional machine 50 provides the image data that are obtaining by scanning to the data receiving unit 131 of the security attribute estimating server 10, requesting an estimation of the security attribute value of the image data. The transmission of image data may be carried out every time the image data are scanned, every time a predetermined number of sets of image data are collected, or at a predetermined interval.

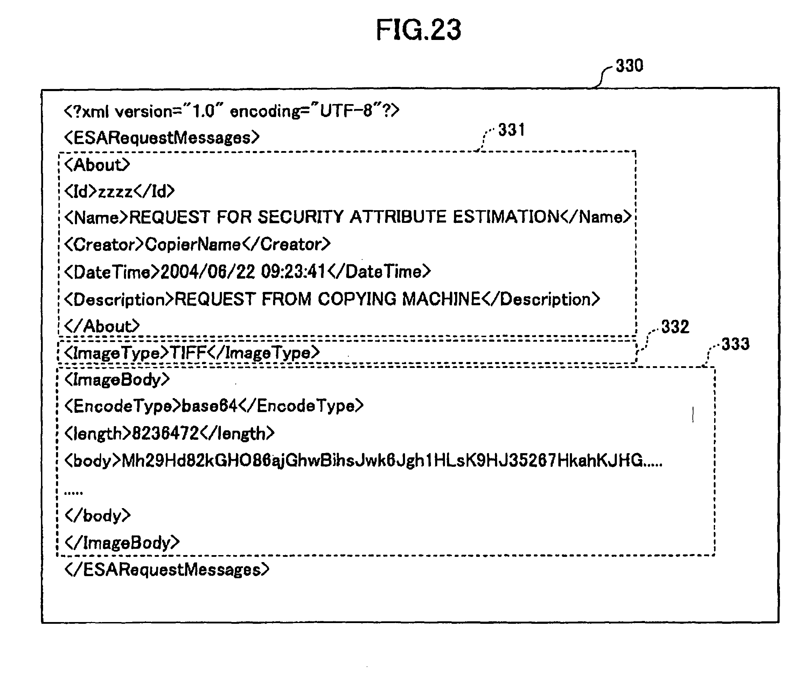

Fig. 23 shows information provided as a request to estimate the security attribute value of the image data. Fig. 23 shows the case wherein communications between the multifunctional machine 50 and the data receiving unit 131 are based on SOAP. Accordingly, the information included in tha estimation request of a security attribute value is expressed in XML. In addition, Fig. 23 shows not the SOAP message itself, but the information extracted from the SOAP message.

In Fig. 23, the estimation request information 330 includes an About element 331 surrounded by <About> tags, an ImageType element 332 surrounded by <ImageType> tags, and an ImageBody element 333 surrounded by <ImageBody> tags. The About element 331 outlines a result of estimation. Since the contents of the About element 331 are the same as the About element 311 (Fig. 6), the explanation is not repeated.

The ImageType element 332 is for describing the classification (TIFF) of the image data. The ImageBody element 333 is for describing information about the contents of the image data, wherein the kind of encoding of the image data is surrounded by <EncodeType> tags, the length of the image data is surrounded by <length> tags, and the encoded image data are surrounded <body> tags.

Following Step S421, the process progresses to Step S422, where the data receiving unit 131 provides the received image data (target image) to the similarity degree calculating unit 133. Then, the similarity degree calculating unit 133 requests the data reading unit 134 to read stored image information (S423). Then, the data reading unit 134 reads a part or all of the stored image information from the image information DB 14 (S424), and provides the read image data to the similarity degree calculating unit 133 (S425).

The similarity degree calculating unit 133 calculates the degree of similarity between the target image and each set of the stored image information (S426), and outputs a calculated degree of similarity to the security attribute estimating unit 135 (S427). Based on the degree of similarity, the security attribute estimating unit 135 selects a set of image information out of the stored image information, the set of image information serving as a reference ("reference stored image information") for estimating the security attribute value of the target image, and requests the data reading unit 134 to read the security attribute value of the reference stored image information (S428). Here, the number of sets of reference stored image information is not limited to one, but can be two or greater.

The data reading unit 134 reads the security attribute value of the reference stored image information from the image information DB 14 (S429), and outputs to the security attribute estimating unit 135 (S430). The security attribute estimating unit 135 estimates the security attribute value of the target image based on the read security attribute value according to the estimating method described above (S431), and outputs the security attribute value of the target image as the estimated result to the data transmitting unit 136 (S432). The data transmitting unit 136 provides the estimated security attribute value to the multifunctional machine 50 (S433), and the process is finished.

The multifunctional machine 50 receives the estimated result, and based on the estimated security attribute value, receives access privilege information of a document that has the security attribute value, and autonomously determines an access permission; or alternatively, notifies the documentation manager of the estimated result, and controls the process of copying and scanning request using a response from the manager. For example, the image data obtained by scanning may be deleted, copying may be stopped, scanning data may be provided to the manager, scanning data may be saved being associated with a log, warning may be provided to the manager, and warning may be displayed on a control panel. Any one or any combination of the functions described above may be performed as desired.

Here, calculation of the degree of similarity by the similarity degree calculating unit 133 at step S426 may be performed by using various publicly available methods. For example, a commercial product that measures the amount of features in a real space, such as VISMeister (http://www.ricoh.co.p/vismeister/) may be used. Further, the degree of similarity can be obtained by extracting frequency components of the image information using orthogonal transformation, such as a discrete Fourier transform and a discrete cosine transform, obtaining an average square error (0 through 1), and deducting the average square error from 1.

As described above, according to the security management system 4, even when a document provided by the document server 20 is stored in the security attribute estimating server 10 as image information, the same effect as the security management system 3 of the present invention is obtained.

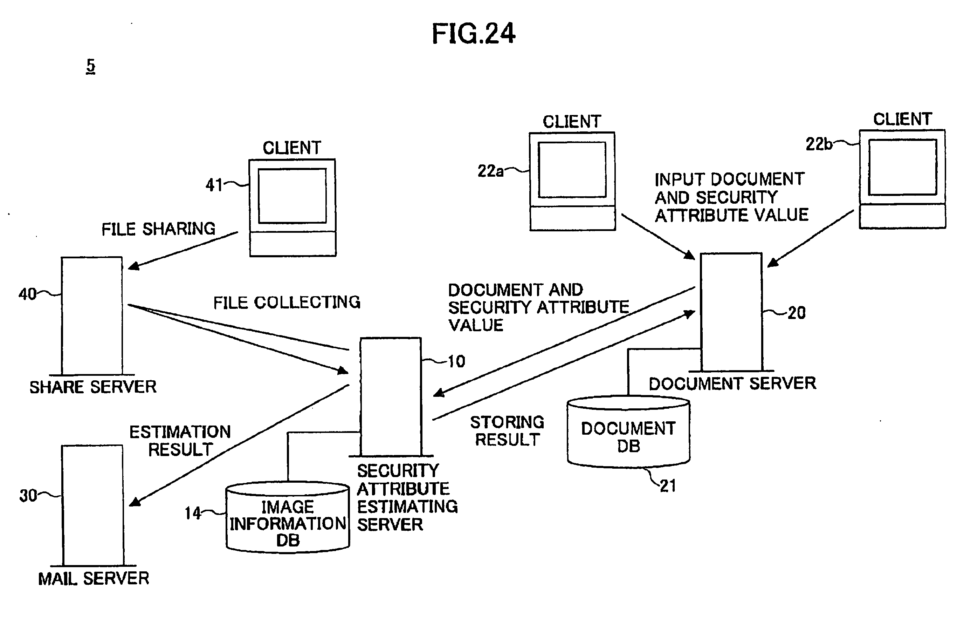

Next, Fig. 24 shows an example of a security management system 5.

The same reference numbers are given to the same portions as Fig. 12 and Fig. 19, and the explanations thereof are not repeated. Comparing Fig. 24 with Fig. 12, the security attribute estimating server 10 of the security management system 5 shown in Fig. 24 includes the image information DB 14 instead of the text information DB 11.

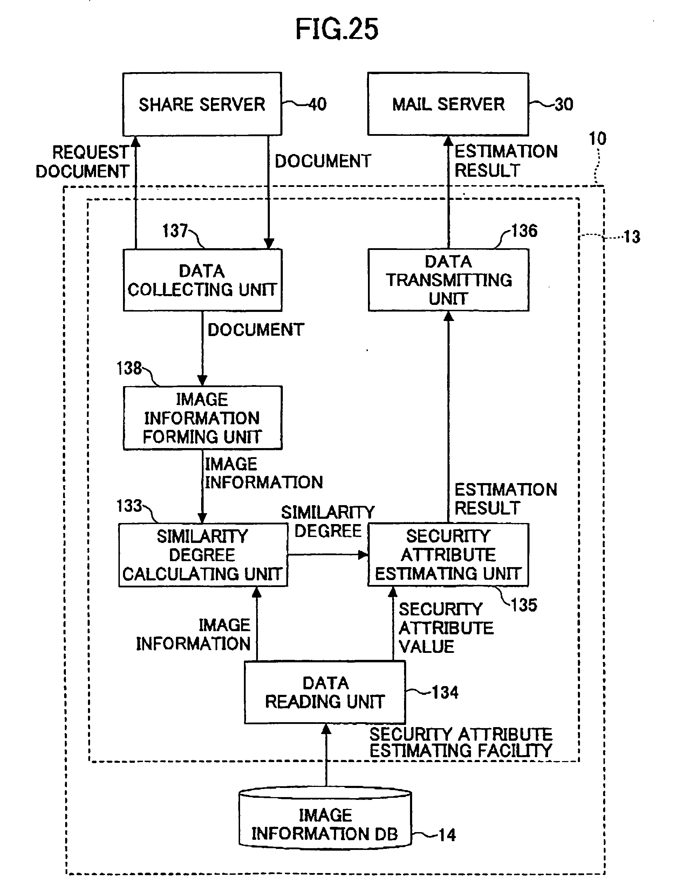

Fig. 25 shows an example of functional configuration of the security attribute estimating server 10.

The same reference numbers are given to the same portions as Fig. 13, and the explanations thereof are not repeated. The security attribute estimating facility 13 of the security attribute estimating server 10 shown in Fig. 25 includes an image information forming unit 138. The image information forming unit 138 has the same function as the image information forming unit 152 of the image information storing facility 15, and generates image information based on the document acquired from the share server 40. Further, the security attribute estimating server 10 includes the image information storing facility 15 that is the same as the image information storing facility 15 shown in Fig. 20, and illustration thereof is omitted in Fig. 25.

Hereafter, an operational process of the security management system 5 is described. The uploading process for uploading a document and security information from the document server 20 is the same as shown in Fig. 21. Then, a process of estimating the security attribute value is described

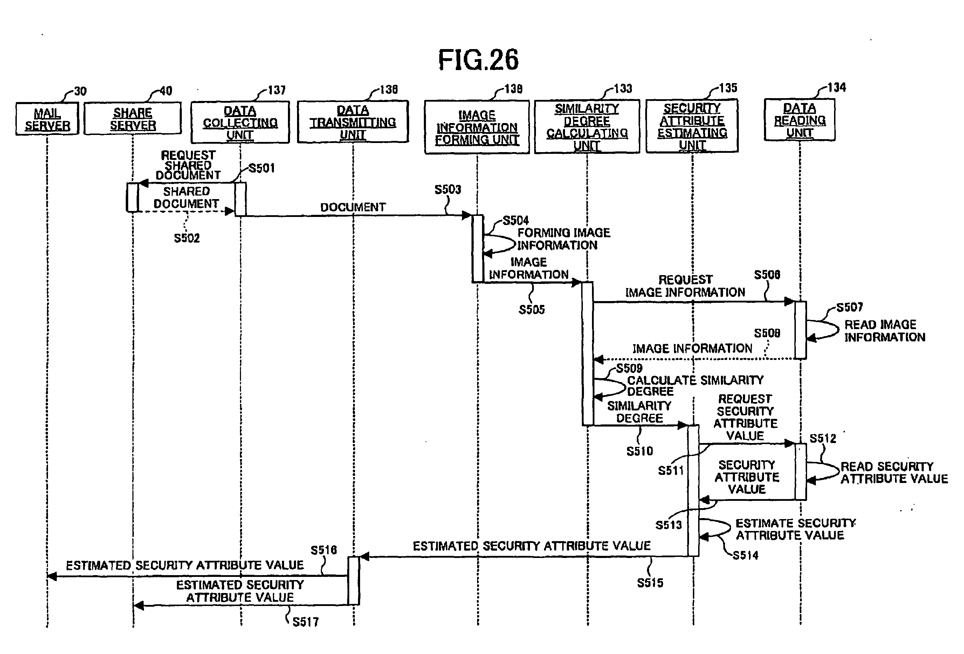

Fig. 26 is a sequence diagram for explaining the estimation process of the security attribute value of the target information. The shared document collected from the share server 40 serves as the target information

At steps S501 and S502 of Fig. 26, a shared document is acquired from the share server 40 by the data collecting unit 137 as in Steps S201 and S202 of Fig. 14. The data collecting unit 137 outputs the acquired shared document to the image information forming unit 138 (S503). The image information forming unit 138 that receives the shared document generates the image information of the shared document (S504), and outputs the generated image information to the similarity degree calculating unit 133 (S505).

Henceforth, at steps S506 through S515, calculation of the degree of similarity between the target image and the stored image information, estimating of the security attribute value of the shared document, and so on are performed as Steps S423 through S432 in Fig. 22, and an estimated result is provided to the data transmitting unit 137. The data transmitting unit 137 provides the estimated result to the mail server 30 (S516) and/or the share server 40 (S517) as required.

The mail server 30 or the share server 40, as applicable, can control operations of the shared document by the process that is the same as described above.

As described above, according to the security management system 5 the same effect as the security management system 2 can be acquired, even when the document of the document server 20 is stored in the security attribute estimating server 10 as image information.

In addition, the target information does not have to be a shared file in the share server 40, but can be mail text and attached file provided by the mail server 30. In this case, the security attribute estimating server 10 receives the mail text and attached file from the mail server 30, with subsequent process being as described in Fig. 26.

Further, above descriptions are made on the premise that the document provided from the document server 20 is application data generated by word-processing software, etc.; however the documents concerned may be image data, such as TIFF and JPEG. In this case, the security attribute estimating server 10 does not need to include the image information forming unit 152 in the image information storing facility 15, and can use the image data received from the image information DB 14 as they are.

In addition, the text information DB 11 and the image information DB 14 employed not exclusive, i.e., both can be employed by the security attribute estimating server 10. In this case, either or both of text information and image information may be stored for every document received from the document server 20 according to a predetermined rule. For example, if the rate of text information extracted from a document is greater than a predetermined threshold, the extracted text information is stored in the text information DB 11. To the contrary, if the rate of the text information extracted from the document is smaller than the predetermined threshold, image information is generated based on the document, and the image information is stored in the image information DB 14.

Tha security management systems have been described with the security attribute estimating server 10, the document server 20, the mail server 20, the share server 40, and the multifunctional machine 50 being separate hardware However, these elements may be installed in one case, so that the communication between these elements can be realized by simple exchange of data, rather than using SOAP. The security management system can be constituted with one of a general purpose computer, a scanner, a copy machine, a multifunctional machine, and the like. Latest scanners, copying machines, multifunctional machines, etc., are equipped with a general purpose CPU, and realize functions by software; accordingly, the security management system of the present invention can be easily realized by using a development kit offered by respective venders (reference : RICOH Developer Support Program (RIDSP) http://ww.ricoh.co.jp/dspinfo/rdsp/).

In addition, as described above the security attribute value serves as information that specifies security information. Nevertheless, the information that specifies the security information may be a document ID, for example. This is because security information of a document can be specified based on the document ID. The security attribute estimating server 10 can be configured such that it determines whether an operation on the document is permitted, and provides a result of the determination, in addition to determining the security attribute value of the target information.

## Claims

1. A security information estimating apparatus (1) for estimating security information applicable to target information, the apparatus comprising:
a stored information acquiring unit (134) for acquiring stored information to which the security information is assigned;
a target information acquiring unlit (131) for acquiring the target information in the form of scanned image data;
a similarity determining unit (133) for determining a degree of similarity between the stored information and the target information; and
a security information output unit (135) for selecting the stored information, the security information of which is to be applied to the target information, based on the degree of similarity, and for outputting one of the security information and information that can specify the security informations,
**characterised by** a text information extracting unit (122) arranged to generate false print data based on the stored information and to generate second text information by performing character recognition on the false print data and in that the similarity determining unit (133) determines the degree of similarity between text information based on the second text information and text information based on performing an OCR operation on the target information, and the outputted security information is outputted to a scanner, copying machine or multifunctional machine that automatically determines access permission for the target information.

2. The security information estimating apparatus (1) as claimed in claim 1, wherein the false print data is raster data.

3. The security information estimating apparatus (1) as claimed in claim 1 or 2, **characterized by**:
a text information storing facility (12) for storing the text information based on the stored information; and **characterized in that**
the similarity determining unit (135) determines the degree of similarity between the text information stored in the text information storing facility and the text information based on the target information.

4. The security information estimating apparatus (1) as claimed in any one of claims 1, 2 or 3, **characterized in that**
the stored information acquiring unit (134) acquires the stored information, and one of the security information and the information that can specify the security information, and
the text information storing facility stores the text information based on the stored information, and one of the security information and the information that can specify the security information, wherein the text information and the security information are associated with each other.

5. The security information estimating apparatus as claimed in any one of claims 1 to 4, **characterized in that**
the stored information acquiring unit (134) acquires the stored information, and one of the security information and the information that can specify the security information, and
the image information storing facility stores the image information based on the stored information, and one of the security information and the information that can specify the security information, wherein the image information and one of the security information and the information that can specify the security information are associated with each other.

6. The security information estimating apparatus as claimed in any one of claims 1 through 5, **characterized in that**
the information that specifies the security information is an attribute value of a predetermined attribute that is assigned to the stored information.

7. A security information estimating method of estimating security information of target information using a computer, the method comprising :
a stored information acquisition process (S126) of acquiring stored information to which security information is assigned;
a target information acquisition process (S124) of acquiring target information in the form of scanned image data;
a similarity degree determining process (S128) of determining a degree of similarity between the stored information and the target information; and
a security information output process of
selecting stored information (S133), the security information of which is to be applied to the target information, based on the degree of similarity, and
outputting one of the security information and information that specifies the security information (S134/S135),
**characterised by**:
generating false print data based on the stored information,
generating second text information by performing character recognition on the false print data, and
determining the degree of similarity between text information based on the second text information and text information based on performing an OCR operation on the target information, and the outputted security information is outputted to a scanner, copying machine or multifunctional machine that automatically determines access permission for the target information.

8. The security information estimating method as claimed in claim 7,
wherein the false print data is raster data.

9. The security information estimating method as claimed in claim 7 or 8, **characterized by**:
a text information storing process (S107) of storing the text information based on the stored information; and **characterized in that**
the similarity degree determining process determines the degree of similarity between the text information stored by the text information storing process and the text information based on the target information.

10. The security information estimating method as claimed in claim 7, 8 or 9, **characterized in that**
the stored information acquisition process acquires the stored information, and one of security information thereof and information that specifies the security information, and
the text information storing process stores the text information based on the stored information, and one of the security information and the information that specifies the security information, wherein the text information and one of the security information and the information that specifies the security information are associated with each other.

11. The security information estimating method as claimed in any one of claims 7 to 10, **characterized in that**
the stored information acquisition process acquires the stored information, and one of the security information thereof and the information that specifies the security information, and
the image information storing process stores the image information based on the stored information, and one of the security information thereof and the information that specifies the security information, wherein the image information and one of the security information thereof and the information that specifies the security information are associated with each other.

12. The security information estimating method as claimed in any one of claims 7 to 11, **characterized in that**
the information that specifies the security information is an attribute value of a predetermined attribute of the stored information.

13. A computer program product comprising computer readable recording medium that stores therein a plurality of commands for a security information estimating program, the commands causing a computer to execute the method of any one of claims 7 to 12.

## Patentansprüche

1. Sicherheitsinformationen-Ermittlungsvorrichtung (1) zum Ermitteln von Sicherheitsinformationen, die auf Zielinformationen anwendbar sind, die Vorrichtung umfassend:
eine Speicherinformationen-Erfassungseinheit (134) zum Erfassen gespeicherter Informationen, denen die Sicherheitsinformationen zugeordnet sind;
eine Zielinformationen-Erfassungseinheit (131) zum Erfassen der Zielinformationen in der Form von gescannten Bilddaten;
eine Ähnlichkeitsbestimmungseinheit (133) zum Bestimmen eines Ähnlichkeitsgrads zwischen den gespeicherten Informationen und den Zielinformationen; und
eine Sicherheitsinformationen-Ausgabeeinheit (135) zum Auswählen der gespeicherten Informationen, deren Sicherheitsinformationen auf die Zielinformationen anzuwenden sind, basierend auf dem Ähnlichkeitsgrad, und zum Ausgeben eines der Sicherheitsinformationen und von Informationen, die die Sicherheitsinformationen spezifizieren können,
**gekennzeichnet durch** eine Textinformationen-Extraktionseinheit (122), die angeordnet ist, um falsche Druckdaten basierend auf den gespeicherten Informationen zu erzeugen und um zweite Textinformationen **durch** Durchführen von Zeichenerkennumg an den falschen Druckdaten zu erzeugen, und **dadurch**, dass die Ähnlichkeitsbestimmungseinheit (133) den Ähnlichkeitsgrad zwischen Textinformationen, die auf den zweiten Textinformationen basieren, und Textinformationen, die auf Durchführen einer OCR-Operation an den Zielinformationen basieren, bestimmt und die ausgegebenen Sicherheitsinformationen an einen Scanner, ein Kopiergerät oder Multifunktionsgerät ausgegeben werden, der/das automatisch Zugangsgenehmigung für die Zielinformationen bestimmt.

2. Sicherheitsinformationen-Ermittlungsvorrichtung (1) nach Anspruch 1, wobei die falsche Druckdaten Rasterdaten sind.

3. Sicherheitsinformationen-Ermittlungsvorrichtung (1) nach Anspruch 1 oder 2, **gekennzeichnet durch**:
eine Textinformationen-Speichereinrichtung (12) zum Speichern der Textinformationen, die auf den gespeicherten Informationen basieren; und **dadurch gekennzeichnet, dass**
die Ähnlichkeitsbestimmungseinheit (135) den Ähnlichkeitsgrad zwischen den Textinformationen, die in der Textinformationen-Speichereinrichtung gespeichert sind, und den Textinformationen, die auf den Zielinformationen basieren, bestimmt.

4. Sicherheitsinformationen-Ermittlungsvorrichtung (1) nach einem der Ansprüche 1, 2 oder 3, **dadurch gekennzeichnet, dass**
die Speicherinformationen-Erfassungseinheit (134) die gespeicherten Informationen und eines der Sicherheitsinformationen und der Informationen, die die Sicherheitsinformationen spezifizieren können, erfasst, und
die Textinformationen-Speichereinrichtung die Textinformationen, die auf den gespeicherten Informationen basieren, und eines der Sicherheitsinformationen und der Informationen, die die Sicherheitsinformationen spezifizieren können, speichert, wobei die Textinformationen und die Sicherheitsinformationen miteinander assoziiert sind.

5. Sicherheitsinformationen-Ermittlungsvorrichtung nach einem der Ansprüche 1 bis 4, **dadurch gekennzeichnet, dass**
die Speicherinformationen-Erfassungseinheit (134) die gespeicherten Informationen und eines der Sicherheitsinformationen und der Informationen, die die Sicherheitsinformationen spezifizieren könne, erfasst, und
die Bildinformationen-Speichereinrichtung die Bildinformationen, die auf den gespeicherten Informationen basieren, und eines der Sicherheitsinformationen und der Informationen, die die Sicherheitsinformationen spezifizieren können, speichert, wobei die Bildinformationen und eines der Sicherheitsinformationen und der Informationen, die die Sicherheitsinformationen spezifizieren können, miteinander assoziiert sind.

6. Sicherheitsinformationen-Ermittlungsvorrichtung nach einem der Ansprüche 1 bis 5, **dadurch gekennzeichnet, dass**
die Informationen, die die Sicherheitsinformationen spezifizieren, ein Attributwert eines im Voraus bestimmten Attributs sind, das den gespeicherten Informationen zugeordnet ist.

7. Sicherheitsinformationen-Ermittlungsverfahren zum Ermitteln von Sicherheitsinformationen von Zielinformationen unter Verwendung eines Computers, das Verfahren umfassend:
einen Speicherinformationen-Erfassungsprozess (S126) zum Erfassen gespeicherter Informationen, denen Sicherheitsinformationen zugeordnet sind;
einen Zielinformationen-Erfassungsprozess (S124) zum Erfassen von Zielinformationen in der Form von gescannten Bilddaten;
einen Ähnlichkeitsgrad-Bestimmungsprozess (S128) zum Bestimmen eines Ähnlichkeitsgrads zwischen den gespeicherten Informationen und den Zielinformationen; und
einen Sicherheitsinformationen-Ausgabeprozess zum
Auswählen gespeicherter Informationen (S133), deren Sicherheitsinformationen auf die Zielinformationen anzuwenden sind, basierend auf dem Ähnlichkeitsgrad, und
Ausgeben eines der Sicherheitsinformationen und von Informationen, die die Sicherheitsinformationen spezifizieren (S134/S135),
**gekennzeichnet durch**:
Erzeugen falscher Druckdaten basierend auf den gespeicherten Informationen,
Erzeugen zweiter Textinformationen **durch** Durchführen von Zeichenerkennung an den falschen Druckdaten, und
Bestinunen des Ähnlichkeitsgrads zwischen Textinformationen, die auf den zweiten Textinformationen basieren, und Textinformationen, die auf Durchführen einer OCR-Operation an den Zielinformationen basieren, und wobei die ausgegebenen Sicherheitsinformationen an einen Scanner, ein Kopiergerät oder Multifunktionsgerät ausgegeben werden, der/das automatisch Zugangsgenehmigung für die Zielinformationen bestimmt.

8. Sicherheitsinformationen-Ermittlungsverfahren nach Anspruch 7, wobei die falschen Druckdaten Rasterdaten sind.

9. Sicherheitsinformationen-Ermittlungsverfahren nach Anspruch 7 oder 8, **gekennzeichnet durch**:
einen Textinformationen-Speicherprozess (S107) zum Speichern von Textinformationen, die auf den gespeicherten Informationen basieren; und **dadurch gekennzeichnet, dass**
der Ähnlichkeitsgrad-Bestimmungsprozess den Ähnlichkeitsgrad zwischen den Textinformationen, die **durch** den Textinformationen-Speicherprozess gespeichert wurden, und den Textinformationen, die auf den Zielinformationen basieren, bestimmt.

10. Sicherheitsinformationen-Ermittlungsverfahren nach Anspruch 7, 8 oder 9, **dadurch gekennzeichnet, dass**
der Speicherinformationen-Erfassungsprozess die gespeicherten Informationen und eines der Sicherheitsinformationen davon und der Informationen, die die Sicherheitsinformationen spezifizieren, erfasst, und
der Textinformationen-Speicherprozess die Textinformationen, die auf den gespeicherten Informationen basieren, und eines der Sicherheitsinformationen und der Informationen, die die Sicherheitsinformationen spezifizieren, speichert, wobei die Textinformationen und eines der Sicherheitsinformationen und der Informationen, die die Sicherheitsinformationen spezifizieren, miteinander assoziiert sind.

11. Sicherbeitsinformationen-Ermittlungsverfahren nach einem der Ansprüche 7 bis 10, **dadurch gekennzeichnet, dass**
der Speicherinformationen-Erfassungsprozess die gespeicherten Informationen und eines der Sicherheitsinformationen davon und der Informationen, die die Sicherheitsinformationen spezifizieren, erfasst, und
der Bildinformationen-Speicherprozess die Bildinformationen, die auf den gespeicherten Informationen basieren, und eines der Sicherheitsinformationen davon und der Informationen, die die Sicherheitsinformationen spezifizieren, speichert, wobei die Bildinformationen und eines der Sicherheitsinformationen davon und der Informationen, die die Sicherheitsinformationen spezifizieren, miteinander assoziiert sind.

12. Sicherheitsinformationen-Ermittlungsverfahren nach einem der Ansprüche 7 bis 11, **dadurch gekennzeichnet, dass**
die Informationen, die die Sicherheitsinformationen spezifizieren, ein Attributwert eines im Voraus bestimmten Attributs der gespeicherten Informationen sind.

13. Computerprogrammprodukt, umfassend ein computerlesbares Aufzeichnungsmedium, das darin eine Vielzahl von Befehlen für ein Sicherheitsinformationen-Ermittlungsprogramm speichert, wobei die Befehle bewirken, dass ein Computer das Verfahren nach einem der Ansprüche 7 bis 12 ausführt.

## Revendications

1. Appareil d'estimation d'informations de sécurité (1) pour estimer des informations de sécurité applicables à des informations cibles, l'appareil comprenant :
une unité d'acquisition d'informations stockées (134) pour obtenir des informations stockées auxquelles des informations de sécurité sont attribuées ;
une unité d'acquisition d'informations cibles (131) pour acquérir les informations cibles sous la forme de données d'images scannées ;
une unité de détermination de similitude (133) pour déterminer un degré de similitude entre les informations stockées et les informations cibles ; et
une unité de sortie d'informations de sécurité (135) pour sélectionner les informations stockées, dont les informations de sécurité doivent être appliquées aux informations cibles, en se basant sur le degré de similitude, et pour fournir en sortie l'une des informations de sécurité et des informations qui peuvent spécifier les informations de sécurité,
**caractérisé par** une unité d'extraction d'informations de texte (122) agencée pour générer des données de fausse impression basées sur les informations stockées et pour générer des secondes informations de texte en effectuant une reconnaissance de caractère sur les données de fausse impression et en ce que l'unité de détermination de similitude (133) détermine le degré de similitude entre des informations de texte en se basant sur les secondes informations de texte et des informations de texte en se basant sur la réalisation d'une opération ROC sur les informations cibles, et les informations de sécurité de sortie sont fournies en sortie à un scanner, un copieur ou une machine multifonctionnelle qui détermine automatiquement la permission d'accès aux informations cibles.

2. Appareil d'estimation d'informations de sécurité (1) selon la revendication 1, dans lequel les données de fausse impression sont des données matricielles.

3. Appareil d'estimation d'informations de sécurité (1) selon la revendication 1 ou 2, **caractérisé par** :
un dispositif de stockage d'informations de texte (12) pour stocker des informations de texte en se basant sur les informations stockées ; et **caractérisé en ce que**
l'unité de détermination de similitude (135) détermine le degré de similitude entre les informations de texte stockées dans le dispositif de stockage d'informations de texte et les informations de texte basées sur les informations cibles.

4. Appareil d'estimation d'informations & sécurité (1) selon l'une quelconque des revendications 1, 2 ou 3, **caractérisé en ce que**
l'unité d'acquisition d'informations stockées (134) acquiert les informations stockées, et l'une parmi les informations de sécurité et les informations qui peuvent spécifier les informations de sécurité, et
le dispositif de stockage d'informations de texte stocke les informations de texte en se basant sur les informations stockées, et l'une des informations de sécurité et des informations qui peuvent spécifier les informations de sécurité, où les informations de texte et les informations de sécurité sont associées les unes aux autres.

5. Appareil d'estimation d'informations de sécurité selon l'une quelconque des revendications 1 à 4, **caractérisé en ce que**
l'unité d'acquisition d'informations stockées (134) acquiert les informations stockées, et l'une parmi les informations de sécurité et les informations qui peuvent spécifier les informations de sécurité, et
le dispositif de stockage d'informations d'image stocke les informations d'image en se basant sur les informations stockées, et l'une parmi les informations de sécurité et les informations qui peuvent spécifier les informations de sécurité, où les informations d'image et l'une des informations de sécurité et des informations qui peuvent spécifier les informations de sécurité sont associées les unes aux autres.

6. Appareil d'estimation d'informations de sécurité selon l'une quelconque des revendications 1 à 5, **caractérisé en ce que**
les informations qui spécifient les informations de sécurité sont une valeur d'attribut d'un attribut prédéterminé qui est attribué aux informations stockées.

7. Procédé d'estimation d'informations de sécurité consistant à estimer des informations de sécurité d'informations cibles utilisant un ordinateur, le procédé comprenant :
un traitement d'acquisition d'informations stockées (S126) consistant à acquérir des informations stockées auxquelles des informations de sécurité sont attribuées ;
un traitement d'acquisition d'informations cibles (S124) consistant à acquérir des informations cibles sous la forme de données d'images scannées ;
un traitement de détermination de degré de similitude (S128) consistant à déterminer un degré de similitude entre les informations stockées et les informations cibles ; et
un traitement de sortie d'informations de sécurité consistant à
sélectionner des informations stockées (S133), dont les informations de sécurité doivent être appliquées aux informations cibles, en se basant sur le degré de similitude, et
fournir en sortie l'une des informations de sécurité et des informations qui spécifient les informations de sécurité (S134, S135),
**caractérisé par** les étapes consistant à :
générer des données de fausse impression basées sur les informations stockées,
générer des secondes informations de texte en effectuant une reconnaissance de caractère sur les données de fausse impression, et
déterminer le degré de similitude entre des informations de texte basées sur les secondes informations de texte et des informations de texte basées sur la réalisation d'une opération ROC sur les informations cibles, et les informations de sécurité de sortie sont fournies en sortie à un scanner, un copieur ou une machine multifonctionnelle qui détermine automatiquement la permission d'accès aux informations cibles.

8. Procédé d'estimation d'informations de sécurité selon la revendication 7, dans lequel les données de fausse impression sont des données matricielles.

9. Procédé d'estimation d'informations de sécurité selon la revendication 7 ou 8, **caractérisé par** :
un traitement de stockage d'informations de texte (S107) consistant à stocker des informations de texte en se basant sur les informations stockées ; et **caractérisé en ce que**
le traitement de détermination de degré de similitude détermine le degré de similitude entre les informations de texte stockées par le traitement de stockage d'informations de texte et les informations de texte en se basant sur les informations cibles.

10. Procédé d'estimation d'informations de sécurité selon la revendication 7, 8 ou 9, **caractérisé en ce que**
le traitement d'acquisition d'informations stockées acquiert les informations stockées, et l'une de ses informations de sécurité et des informations qui spécifient les informations de sécurité, et
le traitement de stockage d'informations de texte stocke les informations de texte en se basant sur les informations stockées, et l'une des informations de sécurité et des informations qui spécifient les informations de sécurité, où les informations de texte et l'une des informations de sécurité et des informations qui spécifient les informations de sécurité sont associées les unes aux autres.

11. Procédé d'estimation d'informations de sécurité selon l'une quelconque des revendications 7 à 10, **caractérisé en ce que**
le traitement d'acquisition d'informations stockées acquiert les informations stockées, et l'une de ses informations de sécurité et des informations qui spécifient les informations de sécurité, et
le traitement de stockage d'informations d'image stocke les informations d'image en se basant sur les informations stockées, et l'une de ses informations de sécurité et des informations qui spécifient les informations de sécurité, où les informations d'image et l'une de ses informations de sécurité et des informations qui spécifient les informations de sécurité sont associées les unes aux autres.

12. Procédé d'estimation d'informations de sécurité selon l'une quelconque des revendications 7 à 11, **caractérisé en ce que**
les informations qui spécifient les informations de sécurité sont une valeur d'attribut d'un attribut prédéterminé des informations stockées.

13. Produit de programme informatique comprenant un support d'enregistrement lisible par ordinateur qui y stocke une pluralité d'ordres pour un programme d'estimation d'informations de sécurité, les ordres amenant un ordinateur à exécuter le procédé de l'une quelconque des revendications 7 à 12.
